# EUROPEAN PATENT APPLICATION

(11) **EP 1 728 805 A1**
(43) Date of publication of application: **06.12.2006**
(21) Application number: 06011208.3
(22) Date of filing: 31.05.2006
(51) Int. Cl.: C08F 220/14, C08F 2/14, G03G 5/05

(54) **Aspherical-polymer fine particles and production method thereof, and method for producing lithographic printing plate, ink composition and electrophoretic particle composition**

(30) Priority: 31.05.2005 JP 2005159167; 30.05.2006 JP 2006149309
(71) Applicant: Fuji Photo Film Co., Ltd., Minami-Ashigara-shi, Kanagawa (JP)
(72) Inventor: Makino, Naonori c/o Fuji Photo Film Co., Ltd., Ashigarakami-gun Kanagawa (JP); Kakino, Ryuki c/o Fuji Photo Film Co., Ltd., Haibara-gun Shizuoka (JP)
(74) Representative: HOFFMANN EITLE

(57) **Abstract**

Aspherical-polymer fine particles are resin particles synthesized by polymerizing radically radical polymerizable monomers in a non-aqueous solvent in the presence of a resin for dispersal stability, wherein the aspherical-polymer fine particles have a sphericity of 0.95 or less.

## Description

### Background of the Invention

### 1, Field of the Invention

This invention relates to aspherical-polymer fine particles prepared in a non-aqueous solvent, methods for producing the aspherical-polymer fine particles, and an ink composition, a lithographic printing plate, and an electrophoretic particle composition.

### 2. Background Art

Polymer fine particles are broadly used in the field of organic pigments for paint, organic pigment for paper coating, carriers for diagnostic drug, ink for ink-jet, electrophoretic particles and the like.

A recording device which records an image by a system in which recording dots are formed by spraying a liquid ink onto a recording medium in the form of small droplets, called ink drops, has been realized as an ink-jet printer. The ink-jet printer has been drawing attention as a plain paper recording technique, because it has advantages in that noise is small in comparison with those of printers of other recoding systems, and development, fixing and the like treatments are not necessary. Marry ink-jet printer systems have so far been proposed, and particularly (a) a system in which ink drops are allowed to take flight by the pressure of steam generated by the heat of a heating unit (e.g., JP-B-56-9429 (the term "JP-B" as used herein means an "examined Japanese patent application) and JP-B-61-59911) and (b) a system in which ink drops are allowed to take flight by a mechanical pressure pulse generated by a piezoelectric element (e.g., JP-B-53-12138) are typical examples.

Regarding the recording head to be used in the ink-jet printer (hereinafter referred to as "ink-jet head"), a serial scanning head has been materialized, which is mounted on a carriage to carry out recording while moving toward the orthogonal direction (hereinafter referred to as "principal scanning direction") to the transferring direction (hereinafter referred to as "principal scanning direction") of the recording paper. By this serial scanning head, it is difficult to effect high recording rate. Thus, a line scanning printer having high recording rate effected by the use of a long head in which length of the recording head is made identical to the width of recording paper has also been considered, but materialization of such a line scanning head is not easy because of the following reasons.

Though individual thin nozzles corresponding to the resolution are arranged in a large number in the ink-jet recording device, local concentration of ink is basically apt to occur due to evaporation and volatilization of the solvent, and this is causing clogging of the aforementioned recording nozzles. In addition, in the system in which pressure of steam is used for the formation of ink-jet, adhesion of insoluble matter formed by thermally or chemically reacting with ink induces clogging of the nozzles, and also in the system which uses the pressure generated by a piezoelectric element, ink channel and the like complex structures are causing aptness to induce clogging more frequently. In the line scanning type head which uses a large number of nozzles reaching several thousand which are further larger than the case of the serial scanning type head that uses from scores to one hundred and several tens of nozzles, clogging is generated at a stochastically fairly high frequency, thus posing a problem of lacking in practical reliability.

In addition, in the case of the system which uses the pressure of steam, it is difficult to produce a head having high resolution because of the difficulty in forming ink drops having a particle size of 20 µm or less in diameter corresponding to the recording dot of a little over 50 µm on the recording paper. Also, in the case of the system which uses the pressure generated by a piezoelectric element, it is difficult to produce a head having high resolution because of the problem regarding processing techniques due to the complex structure of the recording head. Thus, the conventional ink-jet recording devices have a problem in that it is difficult to attempt improvement of resolution by any of these systems.

In order to solve these problems, an ink-jet recording system has been proposed, in which voltage is applied to an electrode array formed by arranging on a substrate two or more individual electrodes formed by thin membrane, and ink or coloring material thereof is allowed to take flight as ink drops from the ink liquid surface using electrostatic force. Concretely, a system in which ink drops are allowed o take flight using electrostatic gravitation (e.g., JP-A-49-62024 (the term "JP-A" as used herein means an "unexamined published Japanese patent application) and JP-A-56-4467), a system in which ink drops are allowed o take flight by increasing concentration of a coloring material using ink containing charged coloring material particles (e.g., JP-T-7-502218 (the term "JP-T" as used herein means a published Japanese translation of a PCT patent application)) and the like have been proposed. In these systems, construction of the recording head is a slit shape nozzle structure which does not require individual nozzles for respective dots, or a nozzle-less structure that does not require individual bulkheads of ink channels for respective dots, so that they are effective in preventing and repairing the clogging which was a great hindrance in realizing the recording head of the line scanning type. In addition, the latter case is also fitted for attaining high resolution, because it can stably form ink particles of markedly small diameter so that their flight can be effected.

Regarding polymer particles for the aforementioned ink-jet of the static system, spherical polymer particles obtained by carrying out radical polymerization in a non-aqueous solvent using radically polymerizable monomers of acryl system, as described in JP-A-10-204354, are generally used.

In addition, electrophoretic display devices have been proposed in relation to coloring polymer fine particles which are chargeable coloring polymer fine particles capable of migrating in an electrophoretic display cell through charging. For example, JP-A-2001-249366 proposes an electrophoretic display device which renders possible display contrast by simple matrix drive, and describes on coloring particles in relation to black, white or RGB as coloring charging fine particles to be loaded in a transparent organic insulation liquid cell such as of silicone oil, toluene, xylene, high purity petroleum or the like. In addition, as such migrating particles, polymer particles of polyethylene, polystyrene or the like having an average particle diameter of from 0.5 to 20 µm capable of exerting charging characteristics in an insulating liquid is disclosed.

Under the aforementioned circumstances, for example, functional regular polymer particles, or coloring resin fine particles colored with a dyestuff or pigment which charges in an electrical field system, are concerned in the paper like display (PLD) for displaying an image and/or typing by electrically migrating charging colored polymer fine particles in an insulating colorless transparent or colored transparent fluid to be filled in an electrophoretic display cell. In addition, charging property and electrophoretic property are extremely important for acquiring the colored polymer fine particles with a display form as PLD. Thus, the functional regular polymer particles to be used in the PLD are colored polymer particles having an easily electrically responding charging property in the electrical field system.

In addition, from the viewpoint of obtaining smooth electrophoretic display property by preventing aggregation of migrating particles, it is desirable that the particles were regular shape, preferably spherical particles, more preferably monodisperse-system particles having small distribution degree (dispersal degree) of their particle sizes. Further, charging functional colored polymer fine particles, or electrostatic toner, are concerned in the copier, laser printer, facsimile and the like electrophotography image forming devices. As such charging colored resin fine particles, monodisperse-system functional regular particles having high uniformity ratio of particle size, which hardly cause aggregation bulking at the time of the migration in the cell electrical field system of the former case and also hardly cause aggregation in the transfer and fixing system of the latter case, are in demand.

In the case of charging fine particles to be used in the ink particles for electrostatic ink-jet recording use or particles for electrophoretic display, it is difficult to improve a response to electrical field. In order to improve the response to electrical field, it is necessary to increase charging property of the particle surface. The charging property of particles greatly depends on the chemical composition and surface area of the particle surface. In the case of particles having a constant particle diameter, the surface area of particles becomes large in aspherical particles in comparison with that of spherical counterparts. However, examples of aspherical fine particles are not known as non-aqueous charging polymer fine particles.

In recent years, in order to improve brightness and gloss of paints and the like, or to improve function of diagnostic drugs, polymer fine particles having different shapes from that of the aforementioned spherical-polymer fine particles have been developed. For Example, JP-A-2000-38455 discloses a flat particle, JP-A-6-287244 discloses a particle having a large number of cavities on the surface, JP-A-2002-179708 discloses a method for producing a polymer-fine particle having a large number of surface cavities, JP-A-2003-226708 discloses a method for producing a heteromorphic-polymer fine particle and a heteromorphic fine-particular polymer, and JP-A-8-259863 discloses an ink for ink-jet recording containing an aspherical particle.

However, these aspherical fine particles are products synthesized in water or a high polar solvent and cannot be synthesized in low polar non-aqueous solvents. Thus, they cannot be used in ink particles for ink-jet recording of electrostatic type or particles for electrophoretic display.

### Summary of the Invention

This invention has been made by taking note of the aforementioned matters, and an object is to provide an aspherical fine particle having excellent charging property, and to further provide an ink composition having excellent electric field response, an oil ink composition for process plate of ink-jet type and an electrophoretic particle composition, which use the particles.
(1) Aspherical-polymer fine particles comprising resin particles synthesized by polymerizing radically at least one radical polymerizable monomer in a non-aqueous solvent in the presence of a resin for dispersal stability, wherein the aspherical-polymer fine particles have a sphericity of 0.95 or less
(2) The aspherical polymer-fine particles as described in the item (1), wherein the at least one radical polymerizable monomer is a compound having at least two polymerizable groups in one molecule thereof.
(3) The aspherical polymer-fine particles as described in the item (1), wherein the at least one radical polymerizable monomer is a monomer having at least two ethylene unsaturated bonds in the molecule thereof, the at least two ethylene unsaturated bonds having different reactivities from one another with radical.
(4) The aspherical polymer-fine particles as described in the item (1), wherein the at least one radical polymerizable monomer is a compound represented by the formula (I), 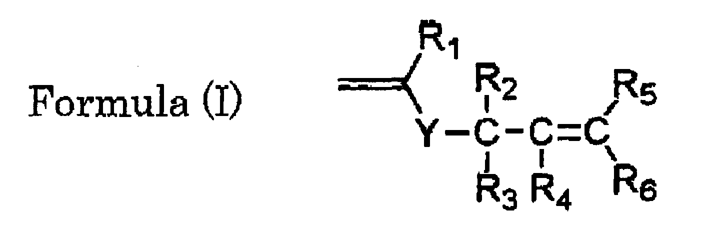 In the general formula (I), R₁ represents one selected from the group consisting of a hydrogen atom, a substituted alkyl group having from 1 to 6 carbon atoms and an unsubstituted alkyl group having from 1 to 6 carbon atoms, each of R₂ to R₆ independently represents one selected from the group consisting of a hydrogen atom, a substituted alkyl group having from 1 to 6 carbon atoms and an unsubstituted alkyl group having from 1 to 6 carbon atoms, respective substituent groups on the adjacent carbon atom may be linked each other to form a cyclic structure, and Y represents a divalent linking group.
(5) The aspherical polymer-fine particles as described in the item (1), wherein at least one radical polymerizable monomer is a monomer having at least two ethylene unsaturated bonds in the molecule thereof the at least two ethylene unsaturated bonds being identical with reactivity.
(6) A method for producing aspherical-polymer fine particles, which comprises a radically polymerizing process, wherein the radically polymerizing process comprises: a dissolving a resin for dispersal stabilization and at least one compound in a non-aqueous solvent, the at least one compound having at least two polymerizable groups in one molecule; an adding a radical polymerizing initiator to the non-solvent; and a heating the non-aqueous solvent.
(7) A method for producing aspherical-polymer fine particles, which comprises a first radically polymerizing process and a second radically polymerizing process, wherein (1) the first radically polymerizing process comprises: a dissolving a resin for dispersal stabilization and radical polymerizable monomers in a non-aqueous solvent so as to provide a first mixture; an adding a radical polymerizing initiator to the first mixture; and a heating the first mixture, (2) the second radically polymerizing process comprises: an adding a radical polymerizing initiator and at least one compound in a non-aqueous solvent, the at least one compound having at least two polymerizable groups in one molecule, to the dispersal solution including the fine particles so as to provide a second mixture; and a heating the second mixture.
(8) An ink composition comprising aspherical polymer-fine particles described in the item (1).
(9) A method for producing lithographic printing plate which comprises; a discharging an ink composition described in the item (8) onto a hydrophilic substrate; and a radiating an active radiation to the ink composition so that a hydrophobic image is formed on the hydrophilic substrate.
(10) An electrophoretic particle composition comprising: aspherical polymer-fine particles described in the item (1), a non-aqueous solvent, and a charge adjusting agent.

Since particle surface area of the aspherical-polymer fine particles of the invention is large in comparison with particles having the same average particle diameter, particle charging quantity is increased, and since the contacting area with other material becomes small, particle re-dispersal property and washing property of adhered particles become good.

By the aspherical-polymer fine particles of the invention, an ink having excellent electric field response and stable discharge for a prolonged period of time can be obtained, and an ink which is also excellent in re-dispersal property can be obtained.

These aspherical-polymer fine particles find versatile use in such applications as an electrostatic ink, an ink composition for process plate, an electrophoretic display, an electronic paper of an electrophoretic type and a toner for electrostatic charge development.

### Brief Description of the Drawings

The invention disclosed herein will be understood better with reference to the following drawings of which:
Fig. I is a schematic drawing that illustrates construction of an ink jet recording device suitable for the use of the ink composition of the invention;
Fig. 2 is a schematic drawing that illustrates structural unit of an electrophoretic display device;
Fig. 3 is a schematic drawing that illustrates an electrophoretic display device;
Fig. 4 is a photographic particle image of the resin fine particle 1 synthesized in Inventive Example 1 and photographed by an electron microscope;
Fig. 5 is a photographic particle image of the resin fine particle 3 synthesized in Inventive Example 3 and photographed by an electron microscope; and

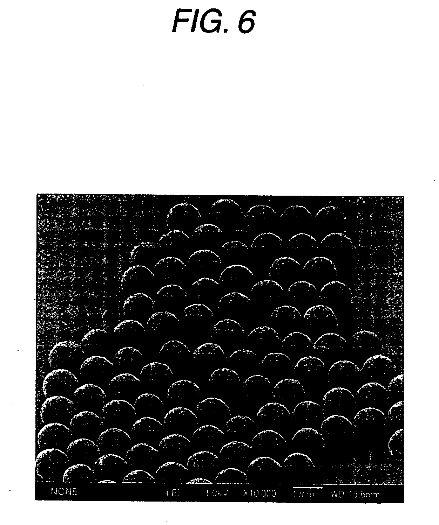

Fig. 6 is a photographic particle image of a resin fine particle for comparison use photographed by an electron microscope.

### Detailed Description of the Invention

The following describes the invention in detail,

### (Aspherical polymer fine particles)

Aspherical-polymer fine particles which have excellent charging property and are useful for an ink composition, an ink composition for process plate of ink-jet type, an electrophoretic particle composition and the like are characterized in being aspherical shape.

As a measure of being aspherical shape, average sphericity can be calculated by observing shape of the particles using an electron microscope and carrying out image analysis.

The aspherical-polymer fine particles of the invention having excellent charging property are aspherical-polymer fine particles having an average sphericity of 0.95 or less.

The average sphericity of polymer fine particles can be easily calculated by preparing particle images using a flow type particle image analyzer FPIA-2100 manufactured by Cismex and carrying out image analysis. The aspherical-polymer fine particles of the invention have an average sphericity of 0.95 or less, preferably from 0.95 to 0.5.

Alternatively, the average sphericity can also be calculated by the image treatment of SEM image.

The sphericity is defined as a value obtained by dividing peripheral length of a circle having the same projected area of the particle image by peripheral length of the projected image of the particle, and the average sphericity (Ca) is a value calculated by the following formula.

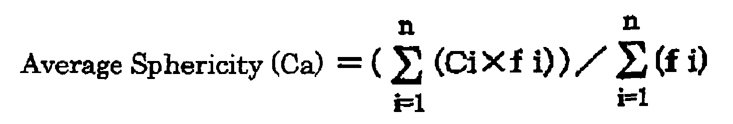

In the above formula, n is the number of particles from which the sphericity Ci was calculated. The sphericity Ci in the above formula is the sphericity of each particle calculated by the following formula based on the peripheral length measured on each particle of a group of particles having a circle-corresponding diameter of from 0.6 to 400 µm.

Sphericity Ci = peripheral length of a circle identical to the projected area of the particle/ peripheral length of the projected image of the particle

In the aforementioned formula, fi is frequency of particles of the sphericity Ci.

The average sphericity is used as a convenient method for quantitatively expressing the shape of particle and is an index showing the degree of irregularity of fine particles. The average sphericity is a value which shows I when a fine particle is perfectly spherical and becomes small as the surface shape of fine particle becomes complex.

According to the invention, it was found that aspherical-polymer fine particles having a sphericity of 0.95 or less can be obtained by carrying out radical polymerization of radically polymerizable monomers in a non-aqueous solvent in the presence of a resin for dispersal stabilization.

The method for synthesizing aspherical-polymer fine particles having a sphericity of 0.95 or less is described in the following.

### (Non-aqueous solvent)

As the non-aqueous solvent, a non-polar insulating solvent having a relative dielectric constant of from 1.5 to 20 and a surface tension of from 15 to 60 mN/m (at 25°C) is desirable, and those having less toxicity, less inflammability and less odor are desirable. Examples of such non-aqueous solvents include solvents selected from straight or branched chain aliphatic hydrocarbons, alicyclic hydrocarbons, aromatic hydrocarbons, petroleum naphtha and halogen substituted products thereof For example, solvents selected from hexane, octane, isooctane, decane, isodecane, decalin, nonane, dodecane, isododecane, Isopar E, Isopar G, Isopar H and Isopar L manufactured by Exon, Soltol manufactured by Phillips Petroleum, IP Solvent manufactured by Idemitsu Petrochemical and petroleum naphtha such as S.B.R., Shellsol 70 and Sellsol 71 manufactured by Shell Oil and Begasol manufactured by Mobil Oil are used alone or as a mixture thereof.

As preferred hydrocarbon solvents, isoparaffin system hydrocarbons having a boiling point of from 150 to 350°C can be cited, and as their commercial items, the aforementioned Isopar G, H, L, M and V (trade names), Norpar 12, 13 and 15 (trade names), IP Solvent 1620 and 2028 (trade names) manufactured by Idemitsu Petrochemical, Isosol 300 and 400 (trade names) manufactured by Japan Petrochemical and Amsco OMS and Amsco 460 solvent (Amsco; trade name of Spirits) can be exemplified. These products are aliphatic saturated hydrocarbons having markedly high purity, and their viscosity at 25°C is 3 cSt or less, their surface tension at 25°C is from 22.5 to 28.0 mN/m, and their specific resistance at 25°C is 10¹⁰ Ω·cm or more. In addition, these are characterized by low reactivity and high stability, low toxicity and high safety and less odor.

As the halogen-substituted hydrocarbon solvents, there are fluorocarbon system solvents, and their examples include C₇F₁₆, C₈F₁₈ and the like perfluoroalkanes represented by CₙF₂ₙ₊₂ (e,g., "Florinate PF 5080" and "Florinate PF 5070" (trade names) manufactured by Sumitomo 3M), fluorine system inactive liquids (e.g., "Florinate FC series" (trade names) manufactured by Sumitomo 3M), fluorocarbons (e.g., "Claitox GPL series" (trade names) manufactured by Dupont Japan Limited), felons (e.g., "HCFC-141b" (trade name) manufactured by Daikin Industries), and [F(CF₂)₄CH₂CH₂I], [F(CF₂)₆I] and the like iodinated fluorocarbons (e.g., "I-1420" and "I-1600" (trade names) manufactured by Daikin Fine Chemical Laboratory).

As the non-aqueous solvent to be used in the invention, higher fatty acid ester and silicone oil can further be used. Illustrative example of silicone oil includes synthetic dimethylpolysiloxane having low viscosity, and its commercial items include KF96L (trade name) manufactured by Shin-Etsu Silicone and SH 200 (trade name) manufactured by Toray Dow Coming Silicone.

The silicone oil is not limited to these illustrative examples. These dimethylpolysiloxane items can be purchased within a broad range of viscosity depending on their molecular weights, but it is desirable to use those having a viscosity range of from 1 to 20 cSt. Similar to the case of isoparaffin system hydrocarbons, these dimethylpolysiloxane items have a volume resistivity of 10¹⁰ Ω·cm or more and have high stability, high safety, no odor and the like characteristics. In addition, these dimethylpolysiloxane items are characterized by their low surface tension, and they have a surface tension of from 18 to 21 mN/m.

Regarding solvents which can be used by mixing with these organic solvents, alcohols (e.g., methyl alcohol, ethyl alcohol, propyl alcohol, butyl alcohol and alcohol fluoride), ketones (e.g., acetone, methyl ethyl ketone and cyclohexanone), carboxylic acid esters (e.g., methyl acetate, ethyl acetate, propyl acetate, butyl acetate, methyl propionate and ethyl propionate), ethers (e.g., diethyl ether, dipropyl ether, tetrahydrofuran and dioxane), halogenated hydrocarbons (e.g., methylene dichloride, chloroform, carbon tetrachloride, dichloroethane and methyl chloroform) and the like solvents can be exemplified.

### (Resin for dispersal stabilization (P))

The resin for dispersal stabilization (P) to be used in the invention is used for making the aspherical-polymer fine particles (CR) formed by polymerizing radically polymerizable monomers into a stable dispersion in a non-aqueous solvent. It is desirable that the resin for dispersal stabilization (P) is a polymer which at least has a repeating unit represented by the following general formula (II) and is soluble in a non-aqueous solvent. The moiety represented by the general formula (II) is a moiety which becomes soluble in the aforementioned non-aqueous solvent.

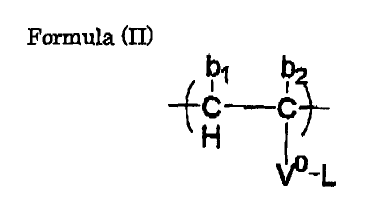

In the general formula (II), V° represents preferably -COO-, -OCO-. -CH₂COO-, -CH₂OCO- or -O-, more preferably -COO-, -OCO-. -CH₂COO-.

L preferably represents an alkyl group or alkenyl group having from 8 to 32 carbon atoms, which may be substituted. As the substituent group, a halogen atom (e.g., fluorine atom, chlorine atom or bromine atom) and ―O-D², ―COO-D² and ―OCO-D² (in this connection, D² represents an alkyl group having from 6 to 22 carbon atoms, and its examples include hexyl group, octyl group, decyl group, dodecyl group, hexadecyl group and octadecyl group) and the like can for example be exemplified. More preferably, L preferably represents an alkyl group or alkenyl group having from 10 to 22 carbon atoms. For example, decyl group, dodecyl group, tridecyl group, tetradecyl group, hexadecyl group, octadecyl group, docosyl group, eicosyl group, decenyl group, dodecenyl group, tridecenyl group, tetradecenyl group, pentadecenyl group, hexadecenyl group, heptadecenyl group, octadecenyl group and docosenyl group can be cited.

The b¹ and b² may be the same or different from each other and each represents preferably hydrogen atom, a halogen atom (e.g., fluorine atom, chlorine atom or bromine atom), cyano group, an alkyl group having from I to 3 carbon atoms,―COO-D³ or ―CB₂COO-D³ (in this connection, D³ represents an aliphatic group having from 1 to 22 carbon atoms, and its examples include methyl group, ethyl group, propyl group, butyl group, hexyl group, octyl group, decyl group, dodecyl group, tridecyl group, tetradecyl group, hexadecyl group, octadecyl group, docosyl group, pentenyl group, hexenyl group, heptenyl group, octenyl group, decenyl group, dodecenyl group, tetradecenyl group, hexadecenyl group and octadecenyl group, wherein these aliphatic groups may have the same substituent groups described in relation to the aforementioned L). More preferably, each of b¹ and b² represents hydrogen atom, an alkyl group having from 1 to 3 carbon atoms (e.g., methyl group, ethyl group or propyl group,-COO-D⁴ or -CH₂COO-D⁴ (in this connection, D⁴ represents an alkyl group or alkenyl group having from 1 to 12 carbon atoms, and its examples include methyl group, ethyl group, propyl group, butyl group, hexyl group, octyl group, decyl group, dodecyl group, pentenyl group, hexenyl group, heptenyl group, octenyl group and decenyl group, wherein these alkyl groups and alkenyl groups may have the same substituent groups described in relation to the aforementioned L).

The resin for dispersal stabilization (P) of the invention is preferably a copolymer containing a monomer which corresponds to the repeating unit represented by the aforementioned general formula (II) and a copolymer component obtained by copolymerizing said monomer with other copolymerizable monomer.

Regarding the other copolymerizable monomer, it may be any monomer with the proviso that it contains a polymerizable double bond group, and its examples include acrylic acid, methacrylic acid, crotonic acid, itaconic acid and the like unsaturated carboxylic acids; ester derivatives or amide derivatives of an unsaturated carboxylic acid having 6 or less carbon atoms; vinyl esters or allyl esters of carboxylic acids; styrenes; methacrylonitrile; acrylonitrile; and heterocyclic compounds containing a polymerizable double bond group.

More illustratively, for example, vinyl esters or allyl esters of an aliphatic carboxylic acid having from 1 to 6 carbon atoms (e.g., acetic acid, propionic acid, butyric acid or monochloroacetic acid); alkyl esters or amides of acrylic acid, methacrylic acid, crotonic acid, itaconic acid, maleic acid and the like unsaturated carboxylic acids, which have from 1 to 4 carbon atoms and may be substituted (examples of the alkyl group include methyl group, ethyl group, propyl group, butyl group, 2-chloroethyl group, 2-bromoethyl group, 2-hydroxyethyl group, 2-cyanoethyl group, 2-nitroethyl group, 2-methoxyethyl group, 2-methanesulfonylethyl group, 2-benzenesulfonylethyl group, 2-carboxyethyl group, 4-carboxybutyl group, 3-chloropropyl group, 2-hydroxy-3-chloropropyl group, 2-furfurylethyl group, 2-thienylethyl group and 2-carboxyamidoethyl group); styrene derivatives (e.g., styrene, vinyltoluene, α-methylstyrene, vinylnaphthalene, chlorostyrene, dichlorostyrene, bromostyrene, vinylbenzenecarboxylic acid, chloromethylstyrene, hydroxymethylstyrene, methoxymethylstyrene, vinylbenzenecarboxyamide and vinylbenzenesulfoamide); acrylic acid, methacrylic acid, crotonic acid, maleic acid, itaconic acid and the like unsaturated carboxylic acids; cyclic acid anhydride of maleic acid and itaconic acid; acrylonitrile; methacrylonitrile; heterocyclic compounds containing a polymerizable double bond group (illustratively, the compounds described for example in "Polymer Data Handbook -Elementary Book- (written in Japanese)" pp. 175 - 184, edited by Kobunshi Gakkai, published in 1986 by Baifukan, such as N-vinylpyridine, N-vinylimidazole, N-vinylpyrrolidone, vinylthiophene, vinyltetrahydrofuran, vinyloxazoline, vinylthiazole and N-vinylmorpholine) and the like can be cited. These other monomers may be used as a combination of two or more species.

Among the polymer components of the resin for dispersal stabilization (P), amount of the component of the repeating unit represented by general formula (II) is at least 50% by mass or more, preferably 60% by mass or more, more preferably 70% by mass or more, based on the whole polymer components. In addition, regarding the resin for dispersal stabilization (P), the method for polymerizing the copolymer component represented by general formula (II) which becomes soluble in the non-aqueous solvent with other copolymerizable monomer may be either random copolymerization or block copolymerization. Preferred is block copolymerization. In this connection, the resin for dispersal stabilization (P) of the invention does not have a bridge structure between polymer principal chains.

In a further preferred embodiment of the resin for dispersal stabilization (P) of the invention, a polymerizable double bond group represented by the following general formula (III) is bonded to one terminus of the polymer principal chain or to the substituent group of the repeating component constituting the polymer (to be referred sometimes to as resin for dispersal stabilization (PG) hereinafter), and this polymerizable double bond group may be any functional group capable of copolymerizing with the aspherical-polymer fine particles-constituting radically polymerizable monomer which is described later.

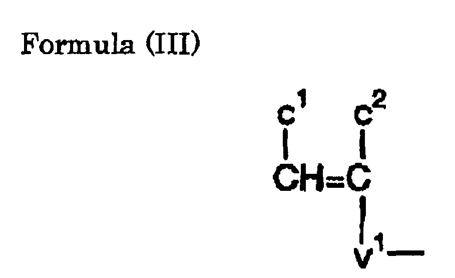

In the general formula (III), V¹ represents -COO-, -(CH₂)ₜCOO-, -(CH₂)ₜOCO-, -O-, -SO₂-, -CONHCOO-, -CONHCONH-, -CON(D²)- or -SON(D²) (wherein D² represents hydrogen atom or a hydrocarbon radical such as an alkyl group having from 1 to 22 carbon atoms, and t is an integer of from 1 to 4) or 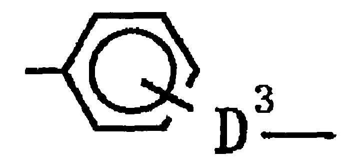 (wherein D³ represents a single bond, -O-, -OCO- or -COO-).

The c¹ and c² may be the same or different from each other, and respectively have the same meanings of the b¹ and b² in the general formula (II). It is desirable that either one of c¹ and c² is hydrogen atom.

In addition, the D² as the connecting group of -CON(D²)- or -SO₂N(D²) in V¹ represents preferably represents hydrogen atom or methyl group, ethyl group, propyl group, butyl group, pentyl group, hexyl group, heptyl group, octyl group, decyl group, dodecyl group or the like alkyl group.

As embodiments of the resin (PG) in which a polymerizable double bond group is bonded to one terminus of the polymer principal chain, those which are represented by the following general formula (Pa) can for example be cited.

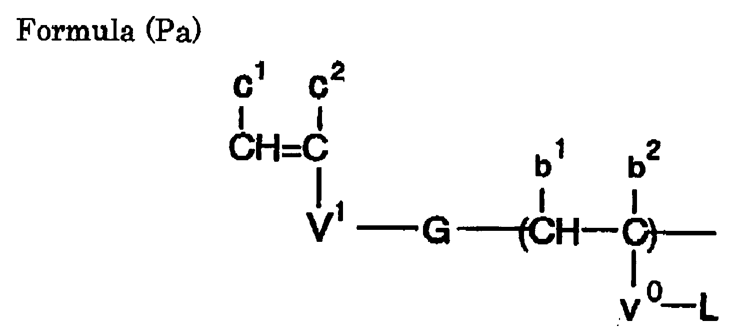

In the general formula (Pa), symbols other than G are as defined in the formulae (II) and (III). G represents a bond directly connecting to one terminus of the polymer principal chain or a bonding group via a connecting group.

The bonding group is constituted by an optional combination of atomic groups of carbon atom-carbon atom bond (single bond or double bond), carbon atom-hetero atom bond (examples of the hetero atom include oxygen atom, sulfur atom, nitrogen atom and silicon atom) and hetero atom-hetero atom bond. For example, 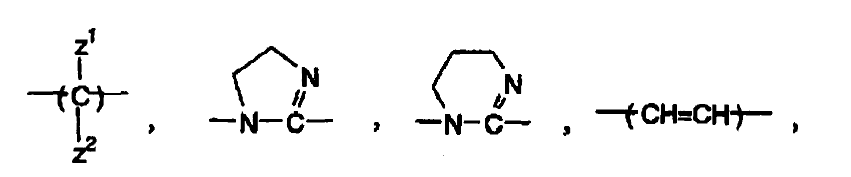 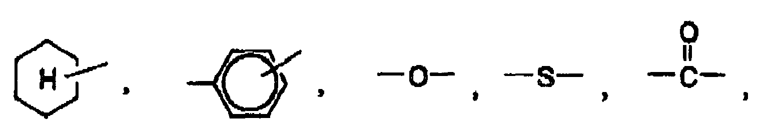 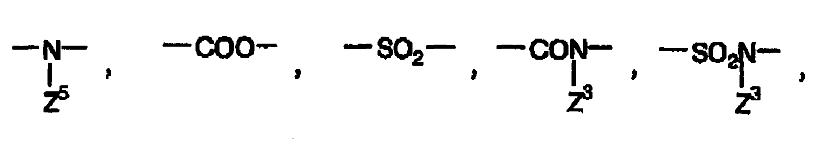 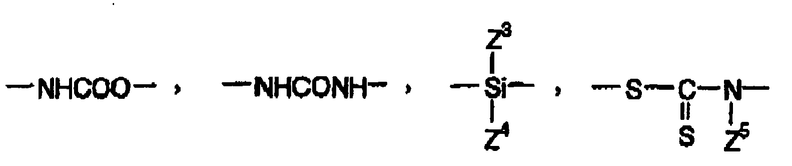 (wherein each of z¹ and z² represents hydrogen atom, a halogen atom (e.g., fluorine atom, chlorine atom or bromine atom), cyano group, hydroxyl group, an alkyl group (e.g., methyl group, ethyl group or propyl group), and each of z³ and z⁴ represents hydrogen atom, a hydrocarbon radical having from 1 to 8 carbon atoms (e.g., methyl group, ethyl group, propyl group, butyl group, pentyl group, hexyl group, benzyl group, phenethyl group, phenyl group or tolyl group) or -Oz⁵ (z⁵ has the same meaning as the hydrocarbon radical in z³)) and the like can be cited.

Examples of the polymerizable double bond group represented by the general formula (III) which binds to one terminus of the polymer principal chain are illustratively shown in the following. In the following illustrative examples, A represents -H, -CH₃ or ―CH₂COOCH₃, B represents ―H or -CH₃, and n represents an integer of from 2 to 10, m represents 2 or 3, t represents 1, 2 or 3, p represents an integer of from 1 to 4, and q represents 1 or 2.

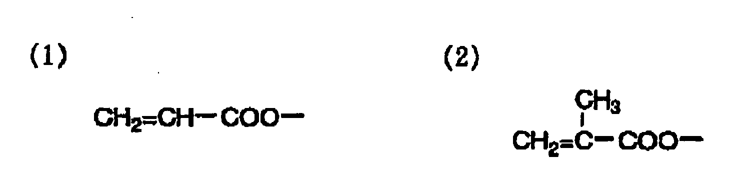

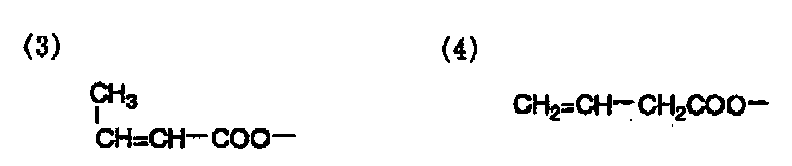

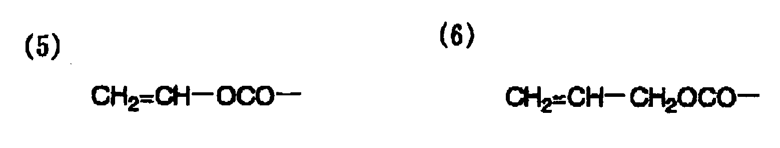

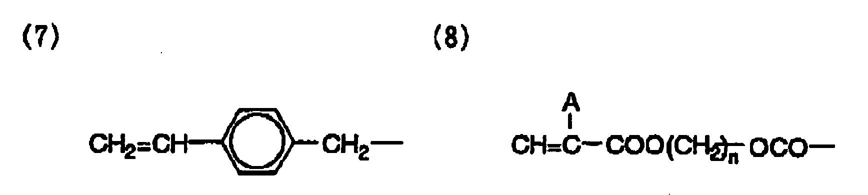

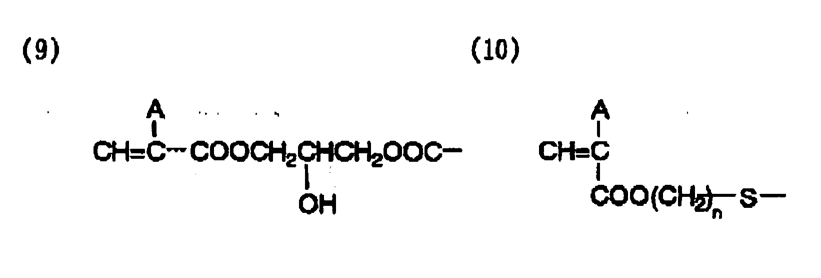

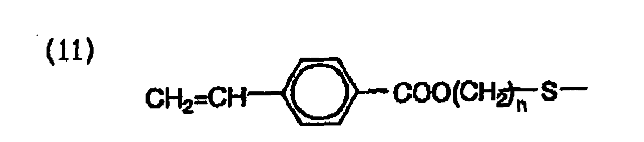

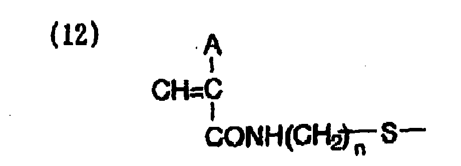

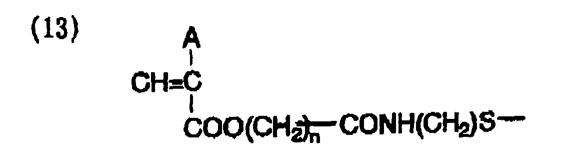

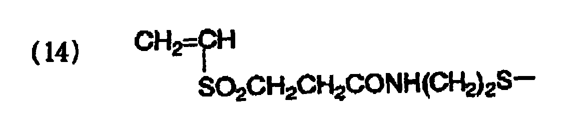

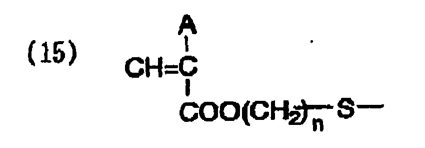

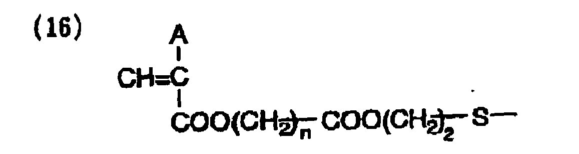

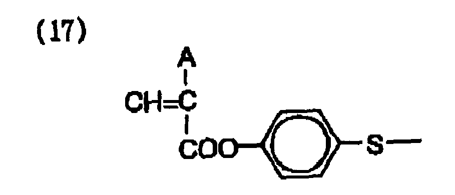

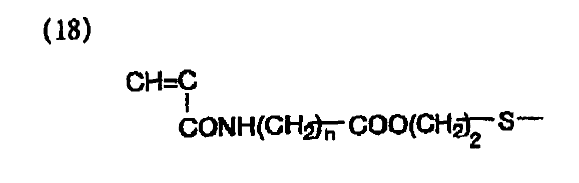

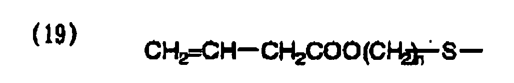

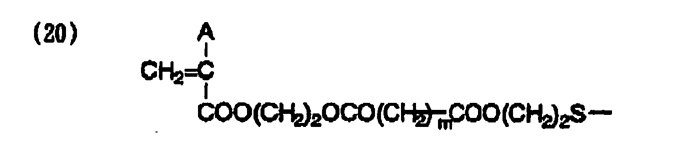

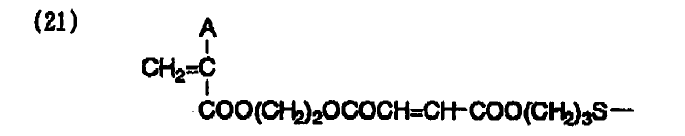

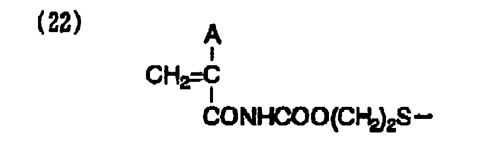

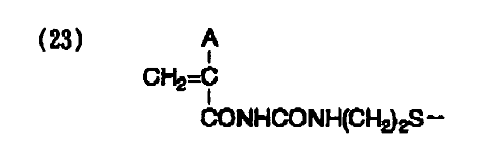

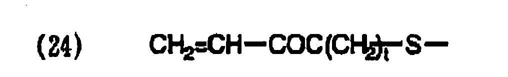

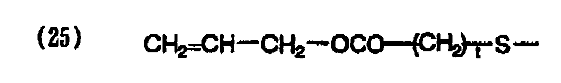

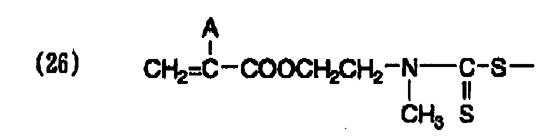

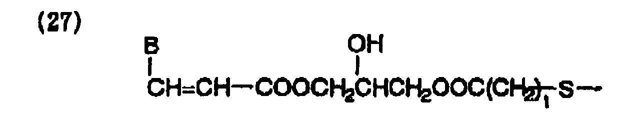

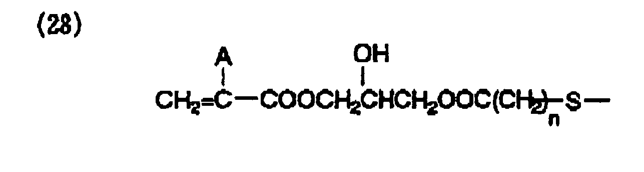

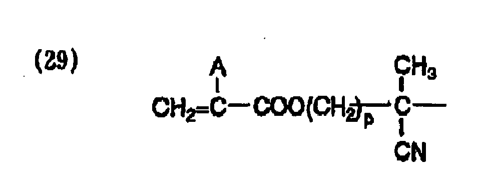

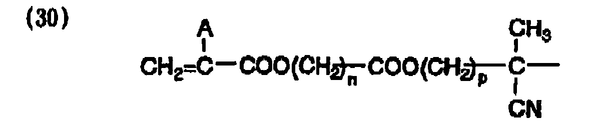

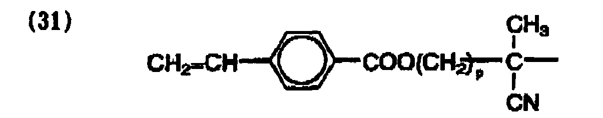

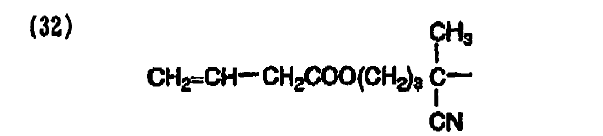

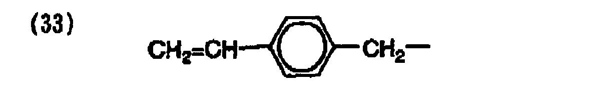

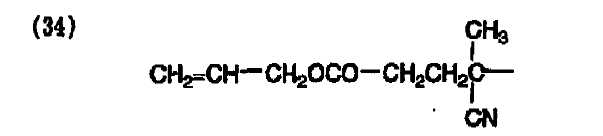

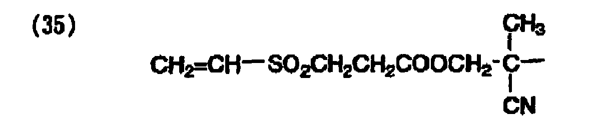

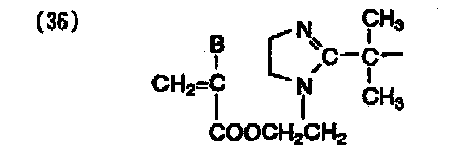

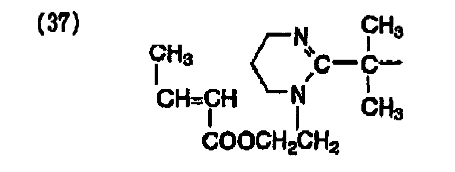

The resin of the invention for dispersal stabilization (PG) in which a polymerizable double bond group is bonded to one terminus of the polymer principal chain can be easily produced by a synthesis method such as a method in which a reagent containing various double bond groups is allowed to react with terminus of a living polymer obtained by a conventionally known radical polymerization (e.g., iniferter method), anion polymerization or cation polymerization, or a reagent containing a specific reactive group (e.g., -OH, -COOH, -SO₃H, -NH₂, -SH, -PO₃H₂, -NCS, 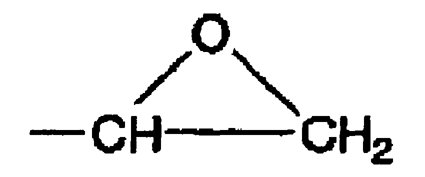 -COCl or -SO₂Cl) is allowed to react with terminus of this living polymer, and then a polymerizable double bong group is introduced by a polymer reaction (a method by ionic polymerization), or a method in which a radical polymerization is carried out using an initiator which contains the aforementioned specific reactive group in the molecule and/or a chain transfer agent, and then a polymerizable double bong group is introduced by carrying out a polymer reaction making use of the specific reactive group bonded to one terminus of the polymer principal chain.

Illustratively, the polymerizable double bong group can be introduced in accordance with the methods described in reviews such as T. Ohtsu, Kobunshi (Polymer), 33 (No. 3), 222 (1984), P. Dreyfuss & R.P Quirk, Encycl. Poly. Sci. Eng., 7, 551 (1987), Y Nakajo and Y Yamashita "Senryo to Yakuhin (Dyestuffs and Drugs)", 30, 232 (1985), A. Ueda and S. Nagai, "Kagaku to Kogyo 'Chemistry and Industry)", 60, 57 (1986), P.F. Rempp & E, Franta, Advances in Polymer Science, 58, 1 (1984), K Ito "Kobunshi Kako (Polymer Processing)", 35, 262 (1986) and V Percec, Applied Polymer Science, 285, 97 (1984), and with the references and the like cited therein.

Further illustratively, a method can be exemplified in which a polymer, wherein a specific reactive group is bonded to one terminus of the polymer principal chain, is synthesized by a method (a) in which a mixture containing at least one species of the monomer corresponding to the repeating unit represented by general formula (II) and a chain transfer agent containing the aforementioned reactive group in the molecule is polymerized using an initiator (e.g., an azobis system compound a or a peroxide), a method (b) in which the polymerization is effected not using the aforementioned chain transfer agent, but using an initiator containing the aforementioned specific reactive group in the molecule, or a method (c) in which a compound containing the aforementioned specific reactive group in the molecule is used in both of the chain transfer agent and initiator, and then a reactive double bond group is introduced by a polymer reaction making use of this specific reactive group.

As the chain transfer agent to be used, a mercapto compound containing a specific reactive group or a substituent group which can be derived into a reactive group (e,g., thioglycolic acid, thiomalicacid, thiosalicylic acid, 2-mercaptopropionic acid, 3-mercaptopropionic acid, 3-mercaptobutyric acid, N-(2-mercaptopropionyl)glycine, 2-mercaptonicotinic acid, 3-[N-(mercaptoethyl)carbamoyl]propionic acid, 3-[N-(mercaptoethyl)amino]propionic acid, N-(3-mercaptopropionyl)alanine, 2-mercaptoethanesulfonic acid, 3-mercaptopropanesulfonic acid, 4-mercaptopropanesulfonic acid, 2-mercaptoethanol, 1-mercapto-2-propanol, 3-mercapto-2-butanol, mercaptophenol, 2-mercaptoethylamine, 2-mercapto imidazole or 2-mercapto-3-pyridinol} or an iodinated alkyl compound containing a specific reactive group or a substituent group which can be derived into a reactive group {e.g., iodoacetic acid, iodopropionic acid, 2-iodoethyl alcohol, 2-iodoethanesulfonic acid or 3-iodopropanesulfonic acid} can for example be cited. Preferably, a mercapto compound can be exemplified.

In addition, as the initiator containing a specific reactive group or a substituent group which can be derived into a reactive group, an azobis compound {e.g., 4,4'-azobis(4-cyanovaleric acid), 4,4'-azobis(4-cyanovaleric acid chloride), 2,2'-azobis(2-cyanopropanol), 2,2'-azobis(2-cyanopentanol), 2,2'-azobis[2-(5-hydroxy-3,4,5,6-tetrahydropyrimidin-2-yl)propane], 2,2'-azobis{2-methyl-N-[1,1-bis(hydroxymethyl)-2-hydroxyethyl]propionamide}, 2,2'-azobis{2-methyl-N-[1,1-bis(hydroxymethyl)ethyl]propionamide}, 2,2'-azobis[2-methyl-N-(2-hydroxyethyl)propionamide] or 2,2'-azobis(2-amidinopropane)}, or a thiocarbamate compound {e.g., benzyl N-methyl-N-hydroxyethylthiocarbamate, 2-carboxyethyl N,N-diethyldithiocarbamate or 3-hydroxypropyl N,N-dimethyldithiocarbamate} can for example be cited.

Each of these chain transfer agents or polymerization initiators is used in an amount vf from 0.05 to 10 parts by mass, preferably from 0.1 to 5 parts by mass, based on 100 parts by mass of total monomers.

In addition, as illustrative embodiments of the resin (PG) containing a polymerizable double bond group in the substituent group of polymer component of the polymer, those which are represented by the following general formula (Pb) can for example be cited.

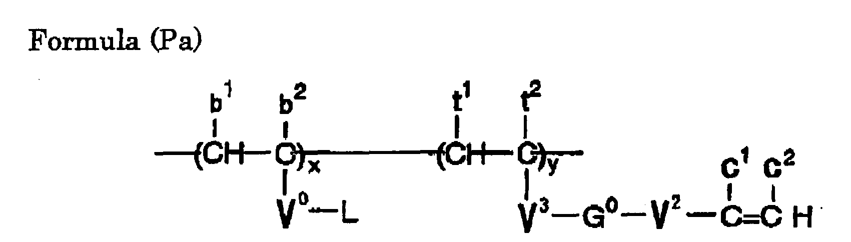

In the formula (Pb), b¹, b², V⁰, L, c¹ and c² are as defined in the foregoing. The component x and component y may be contained in 2 species or more in the resin (P). The t¹ and t² respectively have the same meanings as the aforementioned b¹ and b². The V² and V³ respectively have the same meanings as V¹ in the formula (III). G° is a group which connects the bonding group V² with the bonding group V³, and consists of at least one carbon atom, oxygen atom, sulfur atom, silicon atom or nitrogen atom.

The bonding group is constituted by an optional combination of atomic groups, heterocyclic groups and the like of carbon atom-carbon atom bond (single bond or double bond), carbon atom-hetero atom bond (examples of the hetero atom include oxygen atom, sulfur atom, nitrogen atom and silicon atom) and hetero atom-hetero atom bond. For example, as the aforementioned atomic groups, 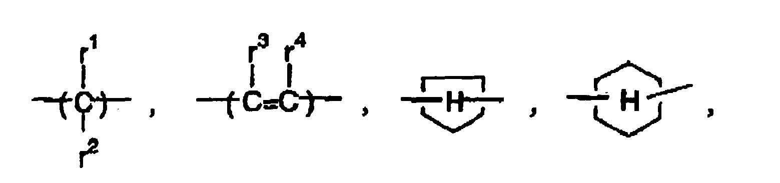 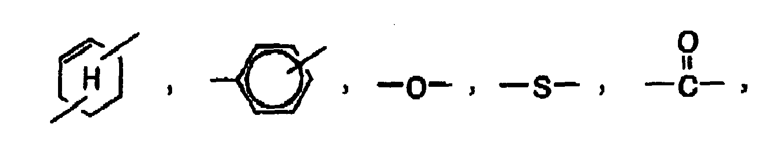 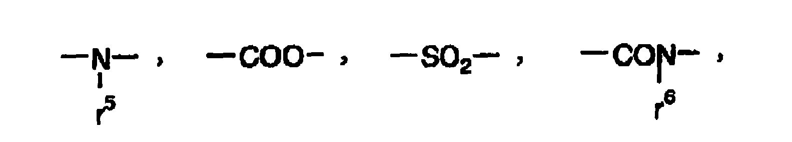 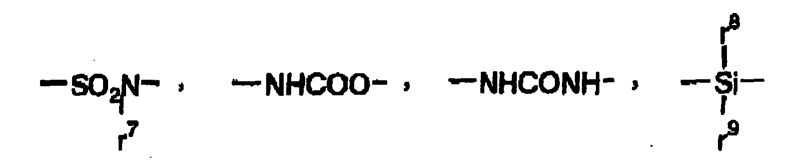 (wherein each of r¹ to r⁴ represents hydrogen atom, a halogen atom (e.g., fluorine atom, chlorine atom or bromine atom), cyano group, hydroxyl group or an alkyl group (e.g., methyl group, ethyl group or propyl group), each of r⁵ to r⁷ represents hydrogen atom or an alkyl group (e.g., methyl group, ethyl group, propyl goup or butyl group), and each of r⁸ and r⁹ represents hydrogen atom, a hydrocarbon radical having from 1 to 8 carbon atoms (e.g., methyl group, ethyl group, propyl group, butyl group, pentyl group, hexyl group, benzyl group, phenethyl group, phenyl group or tolyl group) or -Or¹⁰ (r¹⁰ has the same meaning as the hydrocarbon radical in r⁸)) and the like can be cited.

In addition, examples of the heterocyclic group include heterocyclic rings containing a hetero atom such as oxygen atom sulfur atom or nitrogen atom (e.g., thiophene ring, pyridine ring, pyran ring, imidazole ring, benzimidazole ring, furan ring, piperidine ring, pyrazine ring, pyrrole ring and piperazine ring).

Regarding the component y in the general formula (Pb), it is desirable that the connecting principal chain constituted by the bonding group [-V³-G⁰-V²-] is constituted from 8 or more in total number of atoms. In this case, for example, when V³ represents -COO- or ―CONH-, oxo group (=O group) and hydrogen atom are not included in the number of atoms, and carbon atoms, ether type oxygen atoms and nitrogen atoms which constitute the connecting principal chain are included as the number of atoms. Thus, -COO- and ―CONH-are counted 2 as the number of atoms.

Illustrative examples of the repeating unit containing polymerizable double bond group (component y) are shown in the following, but the invention is not limited thereto.
e¹ : -H or ―CH₃
e² : -H, ―CH₃, -Cl or-CN
k₁: Integer of 4 to 12,k₂: Integer of 2 to 6

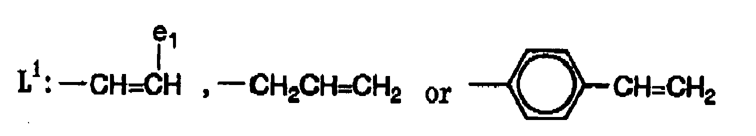

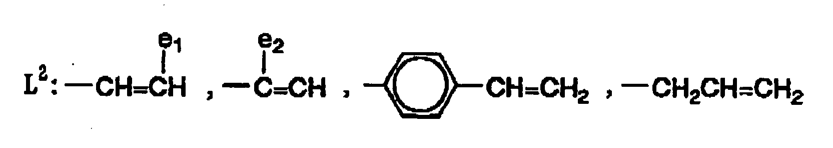

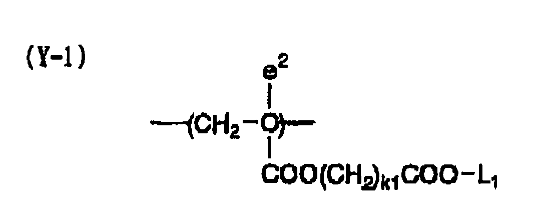

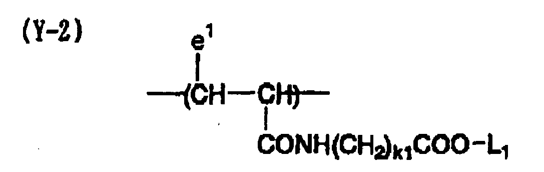

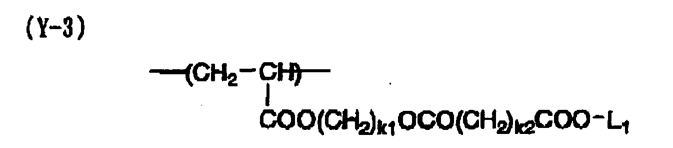

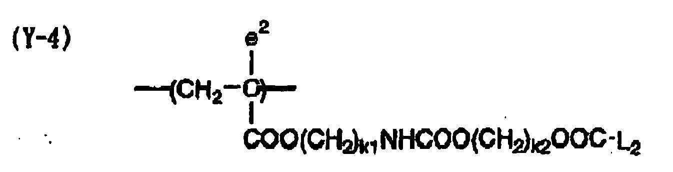

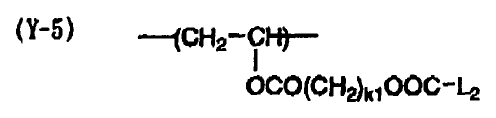

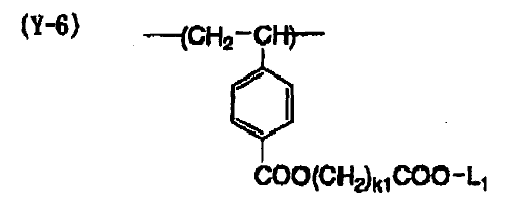

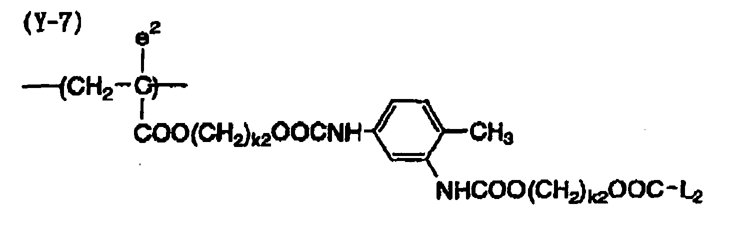

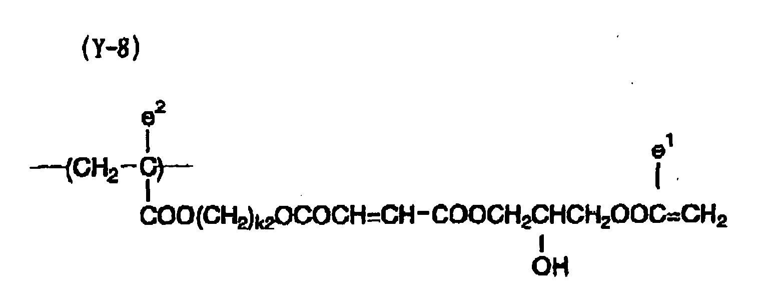

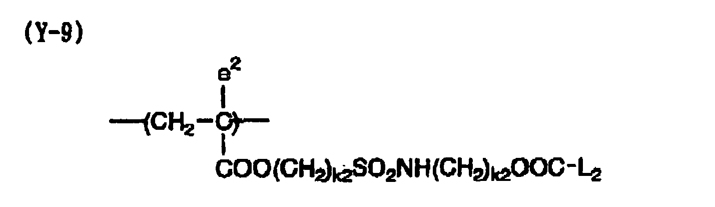

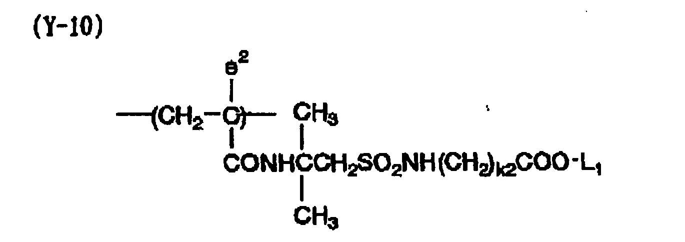

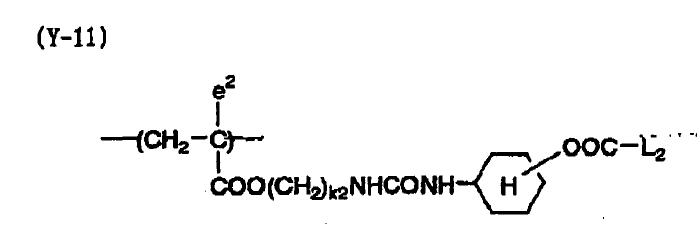

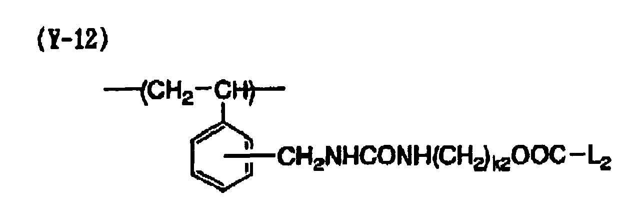

The resin for dispersal stabilization (PG) containing a polymerizable double bond group in the substitution of polymer components can be easily synthesized by a conventionally known synthesis method. That is, as the method for introducing the polymer component containing a polymerizable double bond group (component y), a method in which a monomer containing a specific reactive group (e.g., -OH, -COOH, -SO₃H, -NH₂, -SH, -PO₃H₂, -NCS, -COCl or ―SO₂Cl) is subjected to a polymerization reaction in advance together with a monomer which corresponds to the component x in the general formula (Pb), and then the polymerizable double bond group is introduced by a polymer reaction by allowing a reactive reagent containing the polymerizable double bond group to undergo the reaction cam be exemplified.

Illustratively, a polymerizable double bond group can be introduced in accordance with the methods described in the reviews and references cited therein, exemplified in relation of the aforementioned resin (PG) containing a polymerizable double bond group in one terminus of the polymer principal chain.

Also, as another method, a method described in JP-A-60-185962 can be exemplified, in which a copolymer represented by the general formula (Pb) is synthesized without generating gelatin by carrying out a polymerization reaction using a functional monomer having different reactivity in the radical polymerization reaction, together with a monomer which corresponds to the component x.

According to the resin represented by general formula (Pb), existing ratio of component x/component y is from 90/10 to 99/1 in mass ratio, preferably from 92/8 to 98/2 in mass ratio. Within this range, there is no danger of causing gelation of the reaction mixture or bulky particle diameter of the formed resin particles at the time of the polymerization granulation reaction.

In addition, the resin for dispersal stabilization (PG) to be subjected to the invention may contain other repeating unit as a copolymer component, together with respective repeating units of the general formulae (Pa) and (Pb). As the other copolymer component, it may be any compound with the proviso that it consists of a monomer copolymerizable with monomers which correspond to respective repeating units of the general formulae (Pa) and (Pb). However, for the purpose of obtaining proper dispersal stability of the dispersal resin particles, it is desirable use it within such a range that it does not exceed 20 weights by mass at the most, based on 100 weights by mass of the total polymerizable components.

One of the preferred embodiments of the resin for dispersal stabilization (P) of the invention is a graft polymer which contains at least one species of the monomers constituting the non-aqueous solvent-soluble principal chain and at least one species of macro monomers constituting the non-aqueous solvent-insoluble moiety (side chain moiety) (to be referred sometimes to as resin for dispersal stabilization (PF) hereinafter).

The graft polymer concerned in the invention is not particularly limited with the proviso that the principal chain has a graft chain as the side chain and is soluble in the solvent, but is preferably a polymer which has a weight average molecular weight of 1,000 or more and contains a graft chain as the side chain of a polymer component having a weight average molecular weight 500 or more. The graft polymer particularly preferred as the dispersant is a polymer in which its principal chain moiety is not dissolved in a dispersal medium but the side chain part (graft chain) is dissolved therein.

The "principal chain moiety is not dissolved in a dispersal medium" means that a polymer constituted solely from its principal chain part having no side chain part does not dissolve in the dispersal medium, and illustratively, it is desirable that it has a solubility of 3 g or less based on 100 g of the disperssal medium (25°C).

The "side chain moiety is dissolved in a dispersal medium" means that a polymer constituted solely from its side chain part having no principal chain part dissolves in the dispersal medium, and illustratively, it is desirable that it has a solubility of 5 g or more based on 100 g of the dispersal medium (25°C).

A graft polymer in which its principal chain part is not dissolved but its side chain part is dissolved becomes a state of from transparent to opaque in the dispersal medium and is dissolved or dispersed. When such a graft polymer is used, its principal chain part is strongly adhered to the particles because the principal chain part is not dissolved in the dispersal medium, and on the other hand, affinity of the side chain part for the dispersal medium is improved because the side chain part is dissolved in the dispersal medium, so that the dispersibility of particles in the dispersal medium is improve as a result.

The graft polymer which can be suitably used in the invention is a polymer which contains at least a constituting unit represented by the following general formula (IV) and a constituting unit represented by the following general formula (V), and has a weight average molecular weight of 1,000 or more.

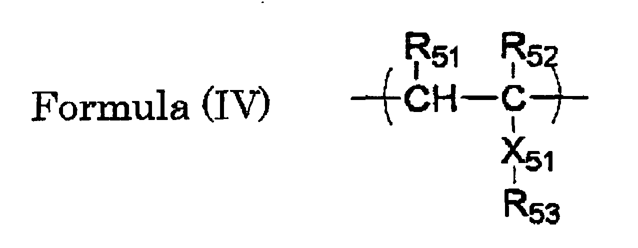

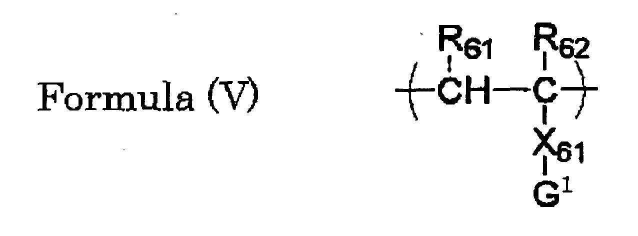

In the general formulae (IV) and (V),

R₅₁,R₅₂, R₆₁ and R₆₂ may be the same or different from one another, and each represents hydrogen atom or methyl group.

R₅₃ represents hydrogen atom or a hydrocarbon radical having from 1 to 30 carbon atoms which may have a substituent group. The hydrocarbon radical of R₅₃ may contain ether bond, ester bond, amido bond, carbamate bond, amino group, hydroxyl group or a halogen substitution group.

X₅₁ and X₆₁ may be the same or different fro each other, and each represents single bond or a divalent connecting group which has 50 or less as the total number of atoms and consists of 2 or more atoms selected from C, H, N, O, S and P.

G¹ represents a polymer component which contains at least a constituting unit represented by the following general formula (VI) and has a weight average molecular weight of 500 or more, or a polydimethylsiloxane group having a weight average molecular weight of 500 or more.

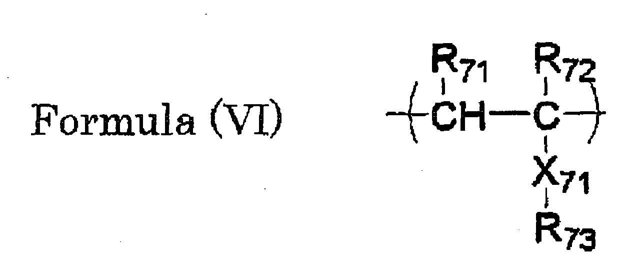

In the general formula (VI),

R₇₁ and R₇₂ may be the same or different from each other, and each represents hydrogen atom or methyl group.

R₇₃ represents hydrogen atom or a hydrocarbon radical having from 1 to 30 carbon atoms which may have a substituent group. The hydrocarbon radical of R₇₃ may contain ether bond, ester bond, amido bond, carbamate bond, amino group, hydroxyl group or a halogen substitution group.

X₇₁ represents single bond or a divalent connecting group which has 50 or less as the total number of atoms and consists of 2 or more atoms selected from C, H, N, O, S and P.

In this connection, from the view point of dispersal stability, it is desirable that the total number of atoms of R₇₂ is larger than the total number of atoms of R₅₃.

The graft polymer which contains at least a constituting unit represented by the general forrrmla (IV) and a constituting unit represented by the general formula (V) and is suitably used in the invention can be obtained by polymerizing a radically polymerizable monomer corresponding to the general formula (IV) with a radically polymerizable macro monomer corresponding to the general formula (V) using conventionally known radical polymerization initiator. In this case, the monomer corresponding to the general formula (IV) is a monomer represented by the following general formula (IVM), and the macro monomer corresponding to the general formula (V) is a monomer represented by the following general formula (VM).

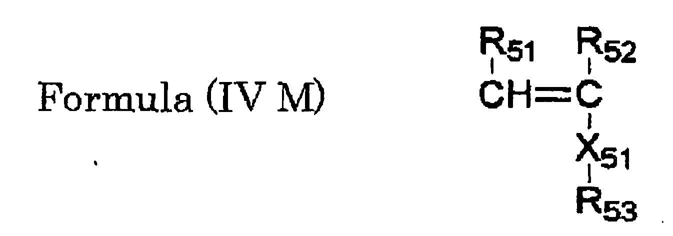

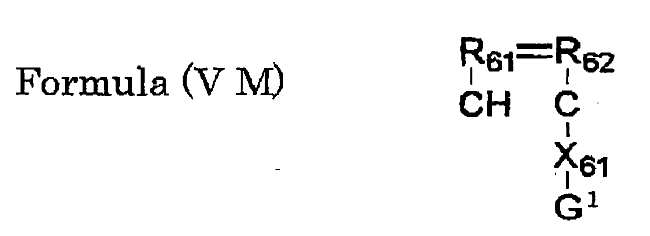

In this connection, respective symbols in the general formulae (IVM) and (VM) have the same meanings as in the general formulae (IV) and (V).

Examples of the monomer represented by the general formula (IVM) include methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, cyclohexyl (meth)acrylate, dodecyl (meth)acrylate, stearyl (meth)acrylate, phenyl (meth)acrylate, benzyl (meth)acrylate, 2-hydroxy (meth)acrylate and the like (meth)acrylic acid esters, and N-methyl (meth)acrylamide, N-propyl (meth)acrylamide, N-phenyl (meth)acrylamide, N,N-dimethyl (meth)acrylamide and the like (meth)acrylamides, styrene, methylstyrene, chlorostyrene, methoxystyrene and the like styrenes, 1-butene and the like hydrocarbons, and vinyl acetates, vinyl ethers and vinylpyridines.

The macro monomer represented by the general formula (VM) is a polymer having a radically polymerizable functional group on its terminus, obtained by polymerizing a radically polymerizable monomer represented by the following general formula (VIM) which corresponds to the general formula (VI), in the presence of a chain transfer agent as occasion demands, and introducing the radically polymerizable functional group into the polymer terminus.

In this connection, the macro monomer represented by the general formula (VM) is preferably a macro monomer having a weight average molecular weight of within the range of from 500 to 500,000 and a polydisperse degree (weight average molecular weight/number average molecular weight) of within the range of from 1.0 to 7.0. In addition, the macro monomer represented by the general formula (VM) may be a polydimethylsiloxane having a radically polymerizable functional group on its terminus.

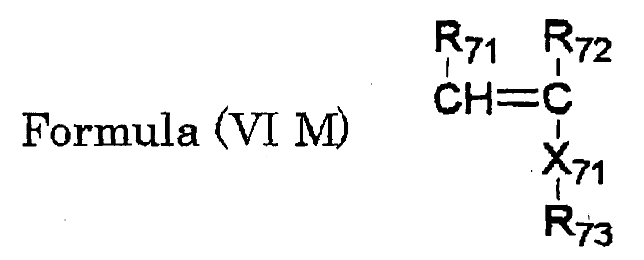

In this connection respective symbols in the general formula (VIM) have the same meaning as in the general formula (VI). Examples of the monomer represented by the general formula (VIM) include methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, cyclohexyl (meth)acrylate, dodecyl (meth)acrylate, stearyl (meth)acrylate, phenyl (meth)acrylate, benzyl (meth)acrylatey 2-hydroxy (meth)acrylate and the like (meth)acrylic acid esters, and N-methyl (meth)acrylamide, N-propyl (meth)acrylamide, N-phenyl (meth)acrylamide, N,N-dimethyl (meth)acrylamide and the like (meth)acrylamides, Styrene, methylstyrene, chlorostyrene, methoxystyrene and the like styrenes, 1-butene and the like hydrocarbons, and vinyl acetates, vinyl ethers and vinylpyridines.

The graft polymer to be used in the invention may solely have the constituting units represented by the general formulae (IV) and (V), but may also have other constituting units. As illustrative examples of the graft polymers to be suitably used in the invention, the polymers [BZ-1] to [BZ-8] represented by the following structural formulae can be cited.

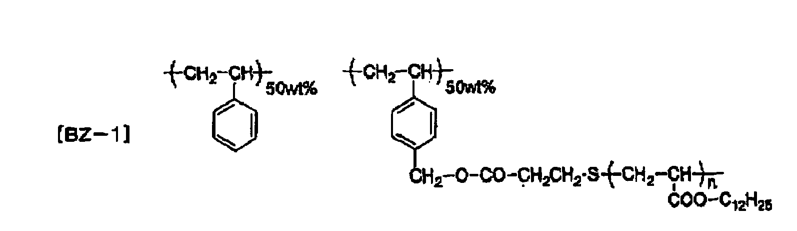

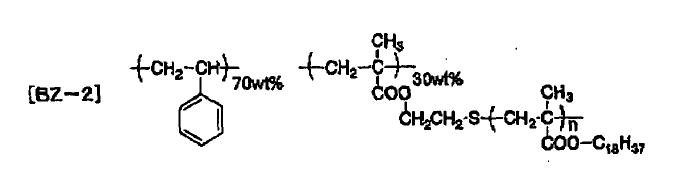

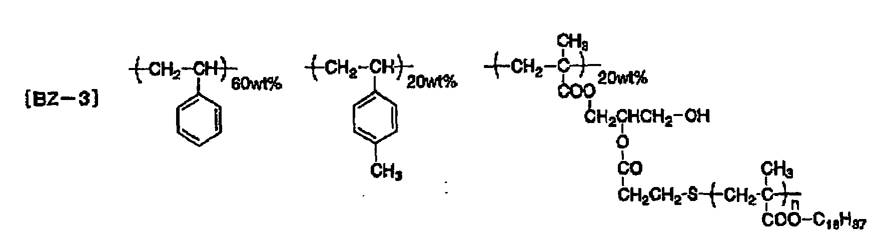

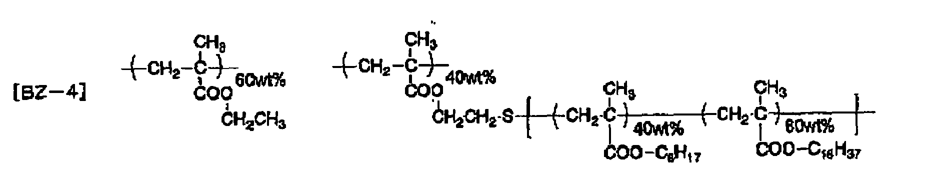

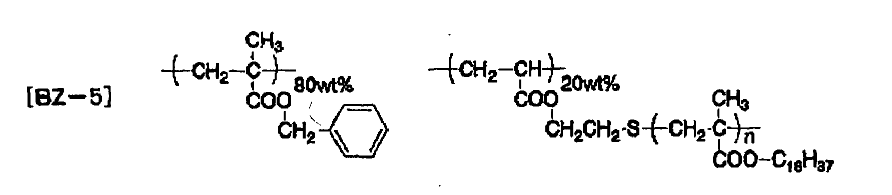

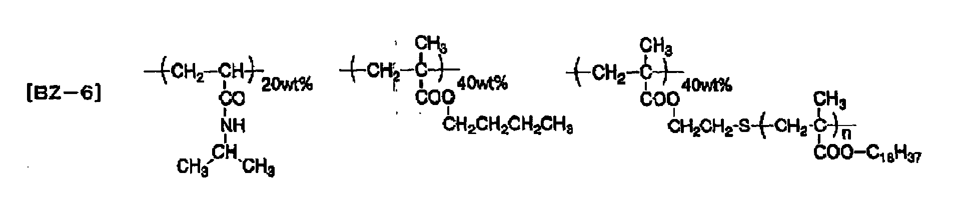

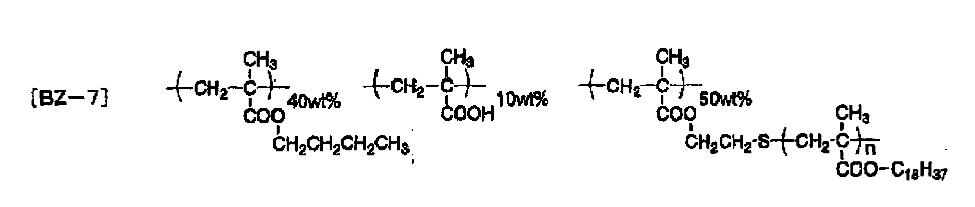

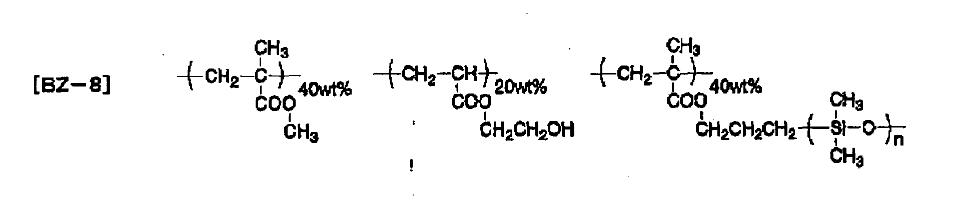

### (In the formulae, n means a polymer of 5 or more.)

The "principal chain part is not dissolved in a dispersal medium" means that a polymer which does not contain the constituting unit represented by the aforementioned general formula (V) has a solubility of 3 g or less based on 100 g of the dispersal medium, and the "side chain part is dissolved in a dispersal medium" means that a polymer of G in the general formula (V), or a macro monomer of the general formula (VM), has a solubility of 5 g or more based on 100 g of the dispersal medium.

According to the invention, from the view point of long-term preservation stability and discharge stability of the particles, it is desirable that the dispersant is a graft polymer having a weight average molecular weight of within the range of from 1,000 to 1,000,000 and a polydisperse degree (weight average molecular weight/number average molecular weight) of within the range of from 1.0 to 7.0.

Also, it is desirable that weight average molecular weight of the graft polymer is 1.5 times or more of the weight average molecular weight of graft chain (preferably the macromer component represented by the aforementioned formula (7)).

In addition, it is desirable that mass ratio of the principal chain-constituting unit and the graft chain-constituting unit is within the range of from 30:70 to 95:5. These polymers may be used alone as the dispersant, or may be used in combination of 2 or more species.

As described in the foregoing, it is desirable to use the resin for dispersal stabilization (PF) consisting of the soluble component containing at least a constituting unit represented by the aforementioned general formula (IV) and a constituting unit represented by the aforementioned general formula (V) and of the insoluble component graft copolymer. In this case, the principal chain part of insoluble component of the resin for dispersal stabilization (PF) is sufficiently adhered to the insoluble resin particles. In addition, it is desirable to use the resin for dispersal stabilization (PG) which contains a polymerizable double bond group. In this case, the resin (PG) is chemically bonded to the insoluble resin particles. It is considered that dispersibility is further improved by this, because so-called steric repulsion effect is provided by the improvement of affinity, for the dispersal medium, of the soluble component of the resin for dispersal stabilization (P) sufficiently adhered or chemically bonded to the dispersed resin particles.

Mass average molecular weight (Mw) of the dispersant (P) of the invention is preferably from 2 x 10⁴ to 1 x 10⁶, more preferably from 3 x 10⁴ to 2 x 10⁵.

### (Radical polymerizable monomer)

As the radical polymerizable monomer of the invention, it is preferable to use at least one of compounds having at least two of polymerizable groups in the molecule. Explanation of the compound is described below.

If the polymerizable group is a group having ethylene unsaturated bond, the ethylene unsaturated bond indicating radical-reactivity, the polymerizable group is not especially restricted. Desirable polymerizable group can be exemplified as an acrylic group, a methacrylic group, allyl group, vinyl group and crotonyl group which may have a substituent.

The number of the polymerizable group is 2 or more, 2 to 18, 2 to 12. That is, it is preferable that the number of the polymerizable is 2 or more in viewpoint of particles and is 18 or less in viewpoint of dispersal stability of particles.

Concrete examples of the aforesaid compound are shown below.

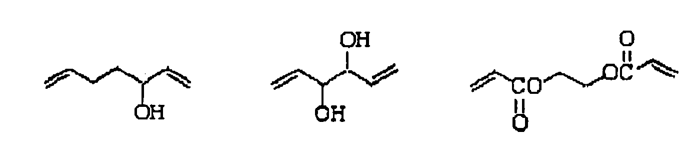

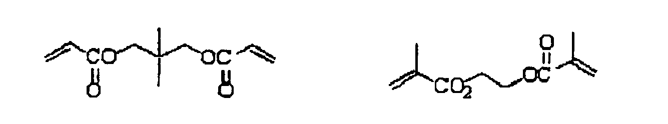

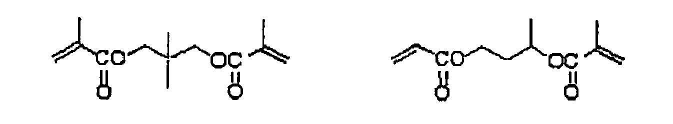

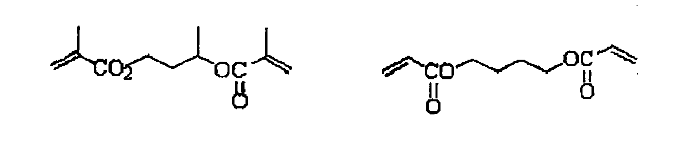

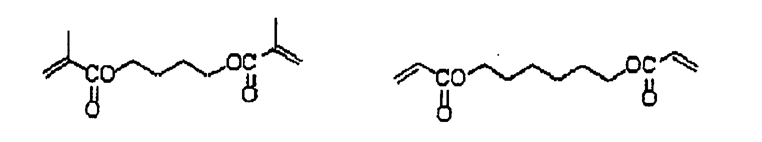

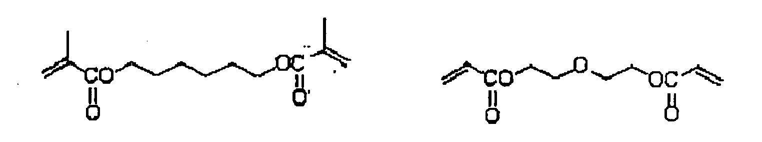

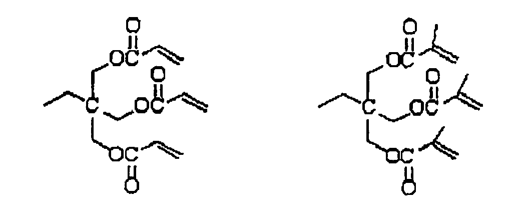

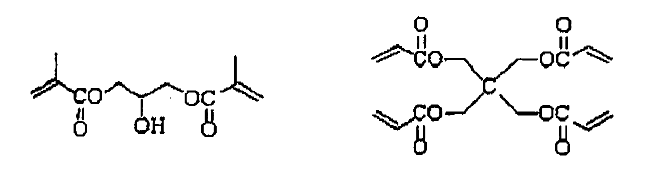

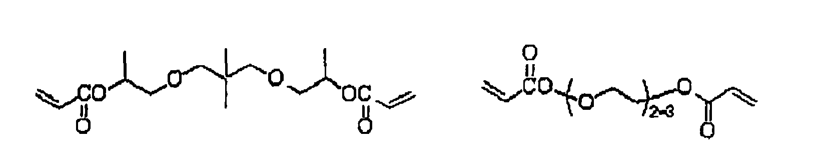

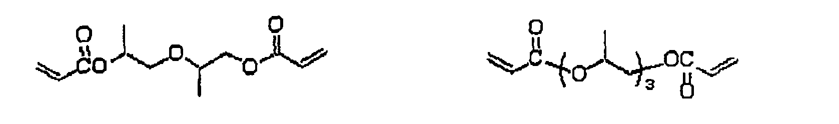

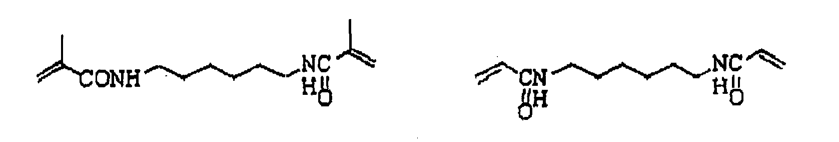

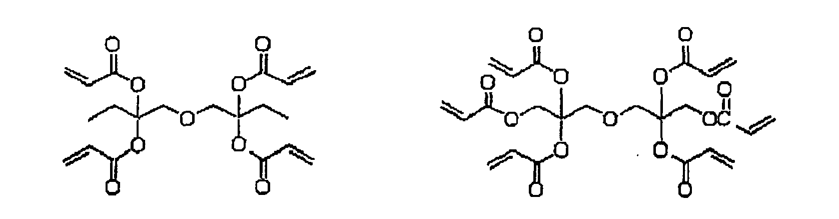

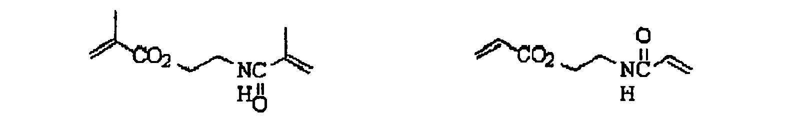

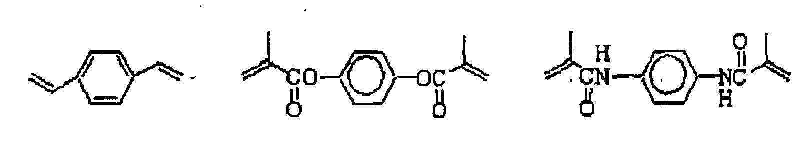

In addition, the radical Polymerizable monomer of the invention is preferably to use a monomer having at least two of ethylene unsaturated bonds, each of the ethylene unsaturated bonds having different reactivity with radical in the molecule thereof. The "different reactivity with radicals" indicates that, under radical polymerization condition of one ethylene unsaturated bond possessed by the monomer, the other ethylene unsaturated bond does not show polymerization ability or does not substantially provide a polymer.

A monomer represented by the following formula (I) can be exemplified as the structure of desirable monomer. The monomer has at least two of ethylene unsaturated bonds, each of the ethylene unsaturated bonds having different reactivity with radical in the molecule thereof.

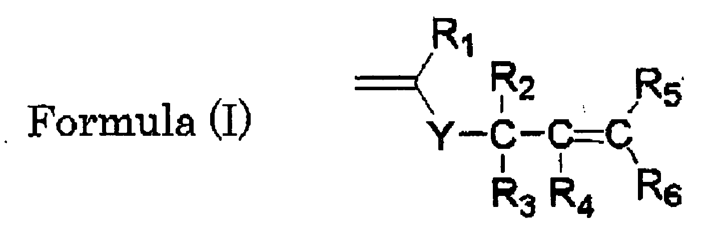

In the general formula (I), R₁ represents hydrogen atom or a substituted or unsubstituted alkyl group having from 1 to 6 carbon atoms (e.g., methyl group, ethyl group, hydroxyethyl group or methoxymethyl group), and R₂ to R₆ represent hydrogen atom or a substituted or unsubstituted alkyl group having from 1 to 6 carbon atoms (methyl group, ethyl group, propyl goup, butyl group, pentyl group or hexyl group), wherein respective substituent groups on the adjacent carbon atom may be together bonded to form a cyclic structure of 5- to 7-membered ring.

Y represents a divalent connecting group, and for example, it represents single bond, -COO-, -OCO-, -CH₂OCO-, -CH₂COO-, -O-, -CONHCOO-, -CONHOCO-, -SO₂-, -CON(Q¹)-, -SO₂N(Q¹)- or phenylene group (hereinafter, phenylene group is described sometimes as "-Ph-", wherein 1,2-, 1,3- and 1,4-phenylene groups are included in the phenylene group). In this case, Q¹ represents hydrogen atom or an aliphatic group having from 1 to 8 carbon atoms which may be substituted (e.g., methyl group, ethyl group, propyl group, butyl group, 2-chloroethyl group, 2-bromoethyl group, 2-cyanoethyl group, 2-hydroxyethyl group, benzyl group, chlorobenzyl group, methylbenzyl group, methoxybenzyl group, phenethyl group, 3-phenylpropyl group, dimethylbenzyl group, fluorobenzyl group, 2-methoxyethyl group or 3-methoxypropyl group).

Illustrative examples of the monomer represented by the general formula (I) are shown in the following.

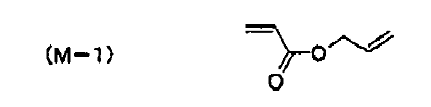

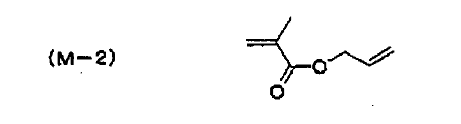

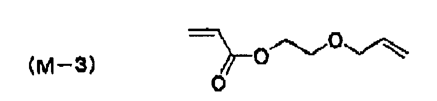

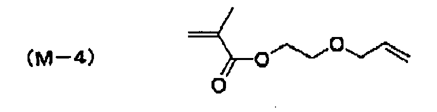

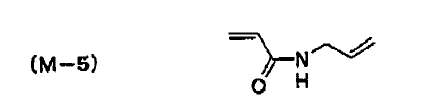

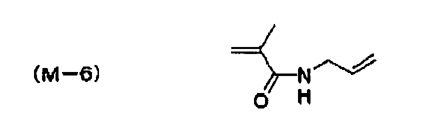

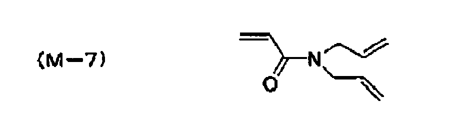

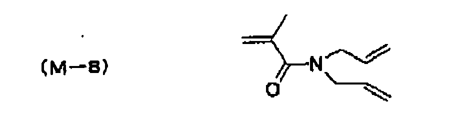

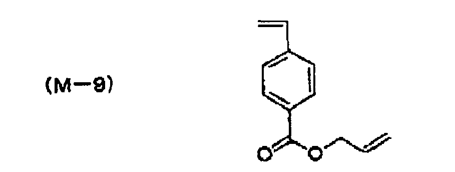

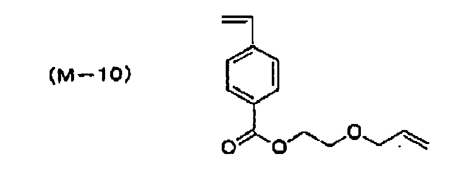

As the radically polymerizable monomer to be used in the invention, in order to control particle forming ability, particle dispersibility and particle charging property, it is desirable to use a conventionally known radically polymerizable monomer in addition to the compound having at least two of polymerizable groups in one molecule. As the other radically polymerizable monomer, a monofunctional monomer which is soluble in non-aqueous solvent but becomes insoluble by polymerization is suitable. Illustratively, a monomer represented by the following formula (II) can for example be cited.

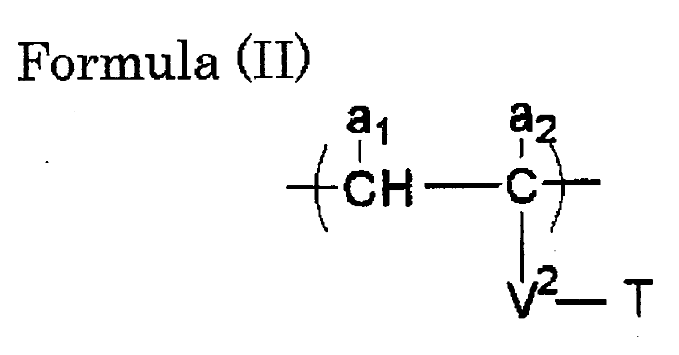

In the general formula (II), V² represents single bond, -COO-, -OCO-, -CH₂OCO-, -CH₂COO-, -O-, -CONHCOO-, -CONHOCO-, -SO₂-, -CON(Q¹)-, -SO₂N(Q¹)- or phenylene group (hereinafter, phenylene group is described sometimes as "-Ph-", wherein 1,2-, 1,3- and 1,4-phenylene groups are included in the phenylene group). In this case, Q¹ represents hydrogen atom or an aliphatic group having from 1 to 8 carbon atoms which may be substituted (e.g., methyl group, ethyl group, propyl group, butyl group, 2-chloroethyl group, 2-bromoethyl group, 2-cyanoethyl group, 2-hydroxyethyl group, benzyl group, chlorobenzyl group, methylbenzyl group, methoxybenzyl group, phenethyl group, 3-phenylpropyl group, dimethylbenzyl group, fluorobenzyl group, 2-methoxyethyl group or 3-methoxypropyl group).

T represents hydrogen atom or an aliphatic group having from 1 to 6 carbon atoms which may be substituted (e.g., methyl group, ethyl group, propyl group, butyl group, 2-chloroethyl group, 2,2-dichloroethyl group, 2-bromoethyl group, 2-hydroxyethyl group, 2-hydroxypropyl group, 2,3-dihydroxypropyl group, 2-hydroxy-3-chloropropyl group, 2-methoxyethyl group, 2-methanesulfonylethyl group, 2-ethoxyethyl group, 3-bromopropyl group, 4-hydroxybutyl group, 2-furfurylethyl group, 2-thienylethyl group, 2-carboxyethyl group, 3-carboxy propylgroup, 4-carboxybutyl group, 2-carboxyamidoethyl group, 2-N-methylcarboxyamidoethyl group, cyclopentyl group, chlorocyclohexyl group or dichloro hexyl group).

The a¹ and a² may be the same or different from each other, and each preferably represents hydrogen atom, a halogen atom (e.g., chlorine atom or bromine atom), cyano group, an alkyl group having from 1 to 3 carbon atoms (e.g., methyl group, ethyl group or propyl group), ―COO-Q² or ―CH₂-COO-Q² (wherein Q² represents hydrogen atom or a hydrocarbon radical having 10 or less carbon atoms which may be substituted (e.g., an alkyl group, an alkenyl group, an aralkyl group or an aryl group)).

Illustrative examples of the radically polymerizable monomer include vinyl esters or allyl esters of an aliphatic carboxylic acid having from 1 to 6 carbon atoms (e.g., acetic acid, propionic acid, butyric acid or monochloroacetic acid); alkyl esters or amides of acrylic acid, methacrylic acid, crotonic acid, itaconic acid, maleic acid and the like unsaturated carboxylic acids, which have from 1 to 4 carbon atoms and may be substituted (examples of the alkyl group include methyl group, ethyl group, propyl group, butyl group; 2-chloroethyl group, 2-bromoethyl group, 2-hydroxyethyl group, 2-cyanoethyl group, 2-nitroethyl group, 2-methoxyetbyl group, 2-methanesulfonylethyl group, 2-benzenesulfonylethyl group, 2-carboxyethyl group, 4-carboxybutyl group, 3-chloropropyl group, 2-hydroxy-3-chloropropyl group, 2-furfurylethyl group, 2-thienylethyl group and 2-carboxyamidoethyl group);
styrene derivatives (e.g., styrene, vinyltoluene, α-methylstyrene, vinylnaphthalene, chlorostyrene, dichlorostyrene, bromostyrene, vinylbenzenecarboxylic acid, chloromethylstyrene, hydroxymethylstyrene, methoxymethylstyrene, vinylbenzenecarboxyamide and vinylbenzenesulfoamide); acrylic acid, methacrylic acid, crotonic acid, maleic acid, itaconic acid and the like unsaturated carboxylic acids; cyclic acid anhydrides of maleic acid and itaconic acid; acrylonitrile; methacrylonitrile; and heterocyclic compounds containing a polymerizable double bond group (illustratively, the compounds described for example in "Polymer Data Handbook -Elementary Book- (written in Japanese)" pp. 175 - 184, edited by Kobunshi Gakkai, published in 1986 by Baifukan, such as N-vinylpyridine, N-vinylimidazole, N-vinylpyrrolidone, vinylthiophene, vinyltetrahydrofuran, vinyloxazoline, vinylthiazole and N-vinylmorpholine).

According to the fine particles of the invention, for the purpose of adding positive charge to the particles in a non-aqueous solvent, it is desirable to use radically polymerizable monomers which have a cationic group. The radically polymerizable monomers having a cationic group are a monomer which contains at least one amino group represented by the following general formula (III) in one molecule and a polymerizable monomer having a nitrogen-containing heterocyclic ring.

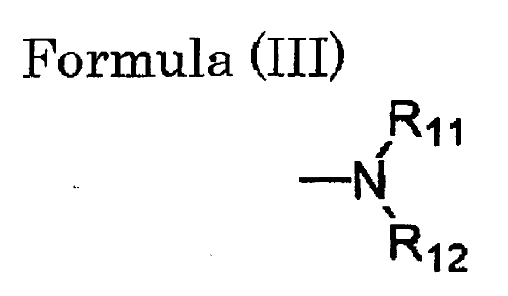

In the general formula (III), R₁₁ and R₁₂ may be the same or different from each other, and each represents hydrogen atom or a hydrocarbon radical having from 1 to 22 carbon atoms, wherein R₁₁ and R₁₂ may be bonded to form a ring together with the nitrogen.

As the nitrogen-containing heterocyclic ring, pyridine, imidazole, indole, carbazole and quinoline can be exemplified. Examples of the preferred structure include those in which the amino group represented by the general formula (III) is bonded to the atomic group represented by T in the aforementioned radically polymerizable monomer represented by the general formula (II). Illustratively, dimethylaminoethyl methacrylate, diethylaminoethyl methacrylate, 4-vinylpyridine, 3-vinylpyridine, vinylimidazole and N-vinylcarbazole can be exemplified.

When positive charge is added to the surface of resin particle, the aforementioned cationic monomer can be used by mixing with the aforementioned radically polymerizable monomer at an optional ratio. Ratio of the cationic monomer in this case is preferably from 1 to 50% by mass, more preferably from 5 to 30% by mass, based on the total mass of the aforementioned radically polymerizable monomer and cation polymerizable monomer.

Such a radically polymerizable monomer may be used as a mixture of two or more species.

Among the radically polymerizable monomers to be used in the polymerization, ratio of the radically polymerizable monomer represented by the formula (I) is generally from 0.1 to 95% by mol, preferably from 0.5 to 80% by mol, more preferably from 1 to 50% by mol, based on the molar quantity of total monomers.

### (Polymerization initiator)

As the initiator to be used in the polymerization, a peroxide system or azo system initiator generally used in radical polymerization can be employed. Its examples include benzoyl peroxide, lawoyl peroxide, octanoyl peroxide, benzoyl orthochloroperoxide, benzoyl orthomethoxyperoxide, methyl ethyl ketone peroxide, diisopropyl peroxycarbonate, cumene hydroperoxide, cyclohexanone peroxide, t-butyl hydroperoxide, diisopropylbenzene hydroperoxide and the like peroxide system initiators, 2,2'-azobisisobutyronitrile, 2,2'-azobis(2,4-dimethylvaleronitrile), 2,2'-azobis(2,3-dimethylbutyronitrile), 2,2'-azobis(2-methylbutyronitrile), 2,2'-azobis(2,3,3-trimethylbutyronitrile), 2,2'-azobis(2-isopropylbutyronitrile), 1,1'-azobis(cyclohexane-1-carbonitrile), 2-(carbamoylazo)isobutyronitrile, 4,4'-azobis(cyanovaleric acid) and dimethyl-2,2'-azobisisobutyrate. It is desirable that said initiator is used in an amount of from 0.01 to 20% by mass, particularly from 0. 1 to 10% by mass, based on the radically polymerizable monomer.

### (Synthesis of aspherical-polymer fine particles (CR))

The aspherical-polymer fine particles (CR) of the invention can be synthesized by subjecting preferably a monomer which has at least two ethylene unsaturated bonds having different reactivities with radicals in the molecule to radical polymerization in a non-aqueous solvent in the presence of the aforementioned resin for dispersal stabilization (P).

As the monomer which has at least two of ethylene unsaturated bonds having different reactivities with radicals in the molecule, the compound having at least two of polymerizable groups in one molecule is desirable.

Illustratively, there is a method in which an initiator is added to a mixture consisting of the resin for dispersal stabilization (P), at least one species of the compound having at least two of polymerizable groups in one molecule and a non-aqueous solvent, or in which tbe resin for dispersal stabilization (P) is dissolved in a non-aqueous solvent, and at least one species of the compound having at least two of polymerizable groups in one molecule and an initiator are added dropwise to the solution together with the non-aqueous solvent as occasion demands, and the particles can be produced by either one of these methods.

In carrying out the polymerization, the monomer concentration is preferably from 5 to 50% by mass, more preferably from 10 to 40% by mass, based on the total of whole polymerizable monomers, non-aqueous solvent and resin for dispersal stabilization (P).

The heating temperature can be set in response to the decomposition temperature of the initiator to be used, and is generally from 30 to 120°C, preferably from 50 to 100°C.

It is desirable to carry out the polymerization in a stream of nitrogen or the like inert gas.

Average particle diameter of the obtained aspherical-polymer fine particles (CR) are preferably from 0.05 to 10 µm, more preferably from 0.1 to 5 µm. By the use of such particles, the resin particles of the invention having an average particle diameter of from 0.1 to 5 µm and showing excellent monodisperse property can be easily produced.

As occasion demands, the aspherical-polymer fine particles (CR) may be concentrated or diluted in the non-aqueous solvent. Alternatively, in order to purify the resin particles, the resins may be used after effecting their precipitation by centrifugation, thereby separating from the supernatant, and then re-dispersing them in the non-aqueous solvent.

The aspherical-polymer fine particles (CR) can also be formed by firstly forming a resin particle (CR0) from a radically polymerizable monomer which does not contain the compound having at least two of polymerizable groups in one molecule, and then using this as the seed particle and adding radically polymerizable monomers (feed monomers) which contain at least one species of the radically polymerizable monomer represented by the aforementioned general formula (I) and a polymerization initiator.

In that case, using ratio of the resin particle (CR0) and the gross radically polymerizable monomers (feed monomers) which contain at least one species of the compound having at least two of polymerizable groups in one molecule is preferably from 5/95 to 95/5, more preferably from 10/90 to 80/20, as a mass ratio of resin particle (CR0)/gross feed monomers. Total amount of the resin particle (CR0) and the gross radically polymerizable monomers is preferably from 10 to 150 parts by mass, more preferably from 10 to 100 parts by mass, based on 100 parts by mass of the non-aqueous solvent.

Amount of the resin for dispersal stabilization (P) to be used is preferably from 3 to 40 parts by mass, more preferably from 5 to 30 parts by mass, based on 100 parts by mass of the whole monomers. Amount of the initiator is preferably from 0.1 to 10% by mass of the whole monomers. In addition, the polymerization temperature is preferably from 40 to 180°C, more preferably from 50 to 120°C. The reaction time is preferably from about 5 to about 20 hours.

### (Ink jet ink composition, oil ink composition for ink jet type process plate and electrophoretic particle composition)

The aforementioned aspherical-polymer fine particles are useful as charging particles in the ink jet ink composition, oil ink composition for ink jet type process plate and electrophoretic particle composition (to be referred collectively and simply to as composition hereinafter).

### (Staining)

In order to use the polymer fine particles of the invention in an ink jet ink or an electrophoretic display device, it is desirable to color the particles as occasion demands. As the coloring agent, any one of pigments and dyestuffs can be used, with the proviso that they are oil ink compositions or conventionally known coloring agents for electrostatic photograph liquid developing agents.

As the pigments, those which are generally used in the technical field of printing can be used regardless of inorganic pigment or organic pigment. Illustratively, carbon black, cadmium red, molybdenum red, chromium yellow, cadmium yellow, titanium yellow, chromium oxide, viridian, titanium cobalt green, ultra marine blue, Prussian blue, cobalt blue, an azo system pigment, a phthalocyanine system pigment, a quinacridone system pigment, an iso indolinone system pigment, a dioxazine system pigment, an indanthrene system pigment, a perylene system pigment, a perynone system pigment, a thioindigo system pigment, a quinophthalone system pigment, a meta complex pigment and the like conventionally known pigments can for example be used without particular limitation.

As the distaffs, an azo dye, a metal complex dye, a naphthol dye, an anthraquinone dye, an indigo dye, a carbonium dye, a quinoneimine dye, a xanthene dye, a cyanine dye, a quinoline dye, a nitro dye, a benzoquinone dye, a naphthoquinone dye, a phthalocyanine dye, a metal phthalocyanine dye and the like oil-soluble dyestuffs are desirable.

These pigments and dyestuffs can be used alone or can be used as an optional combination, but it is desirable to contain within the range of from 0.01 to 5% by mass based on the whole composition.

These coloring agents may be dispersed in the non-aqueous solvent as dispersed particles of the coloring materials, separately from the dispersed aspherical-polymer fine particles, or contained in the polymer fine particles. As a method when they are contained therein, there is a method in which the polymer fine particles are stained with a preferred dyestuff, as described for example in JP-A-57-48738. Alternatively, as another method, there is a method in which the polymer fine particles are chemically bonded to a dyestuff, as described for example in JP-A-53-54029, or there is a method in which a pigment-containing copolymer is prepared using monomers in which the pigment is contained therein in advance in producing the particles by a polymerization granulation method, as described for example in JP-B-44-22955.

In order to stain aspherical-polymer fine particles obtained by the polymerization of the aforementioned radically polymerizable monomers in the non-aqueous solvent in the presence of the aforementioned resin for dispersal stabilization (P), a method in which dispersed liquids of a pigment powder and aspherical-polymer fine particles are mixed and stirred with heating and a method in which a pigment solution is mixed with a dispersion of aspherical-polymer fine particles and stirred with heating can be exemplified, and from the viewpoint of the uniformity of staining, a pigment solution prepared using an organic solvent can be used in this case. Useful as the organic solvent is a solvent which does not dissolve or aggregate the polymer fine particles when the aforementioned pigment is dissolved therein and added to a non-aqueous solvent dispersion of the aspherical-polymer fine particles. In addition, it may also be a solvent which slightly swells the particles. Its illustrative examples include methanol, ethanol, acetone, methyl ethyl ketone, ethyl acetate, dichloromethane and chloroform.

As the concentration of the pigment solution, a range of from 0.01 to 10% by mass is preferably, and that of from 0.1 to 5% by mass is more preferable. In addition, it is desirable to add the pigment solution within a range of from 1 to 20 parts by mass based on 100 parts by mass of the non-aqueous dispersion of aspherical-polymer fine particles. As the heating temperature, a range of from 25°C to 100°C is desirable, and that of from 30°C to 80°C is more desirable. T solvent used in the dissolution of pigment may be evaporated after the heating.

When the non-aqueous solvent is used jointly with a polar solvent such as of the aforementioned alcohols, ketones, ethers or esters, or when unreacted matter of the radically polymerizable monomers is remained at the time of the polymerization, the solvents can be removed by evaporation under heating at the boiling point or more of the polar solvent or monomers or by evaporation under a reduced pressure, or the aspherical-polymer fine particles can be separated from the solvents by centrifugation.

The aspherical-polymer fine particles obtained in the aforementioned manner are present as very fine particles having uniform particle size distribution. The average particle diameter is preferably from 0.1 to 3.0 µm, more preferably from 0.15 to 2.0 µm. This particle diameter can be calculated for example by a centrifugal precipitation type particle size measuring device (e.g., CAPA-700 manufactured by HORIBA) or a laser diffraction scattering type particle size measuring device (e.g., LA-920, manufactured by HORIBA).

In the case of the ink jet ink composition of the invention, it is desirable to use the aspherical-polymer fine particles in an amount of approximately from 0.001 to 10 parts by mass based on 100 parts by mass of the non-aqueous solvent as the carrier liquid.

### (Charge adjusting agent)

Next, as the charge adjusting agent to be used in the invention, those which are conventionally known can used. For example, metal salts of naphthenic acid, octenoic acid, oleic acid, stearic acid and the like fatty acids, metal salts of sulfosuccinic acid esters, the oil-soluble sulfonic acid metal salts described in JP-B-45-556, JP-A-52-37435 and JP-A-52-37049, the phosphoric acid ester metal salts described in JP-B-45-9594, the metal salts of abietic acid or hydrogenated abietic acid described in JP-B-48-25666, the alkylbenzenesulfonic acid Ca salts described in JP-B-55-2620, the metal salts of aromatic carboxylic acids or sulfonic acids described in JP-A-52-107837, JP-A-52-38937, JP-A-57-90643 and JP-A-57-139753, polyoxyethylated alkyl amine and the like nonionic surfactants, lecithin, linseed oil and the like oils and fats, polyvinyl pyrrolidone, organic acid esters of polyhydric alcohols, phosphoric acid ester system surfactants described in JP-A-57-210345, the sulfonic acid resins described in JP-B-56-24944 and the like can be used. In addition, the amino acid derivatives described in JP-A-60-21056 and JP-A-61-50951 can also be used. Also, the maleic acid half amide component-containing copolymer and the like described in JP-A-60-173558 and JP-A-60-179750 cal be exemplified. Further, the quaternarized amine polymers described in JP-A-54-31739 and JP-B-56-24944 can be exemplified.

As preferred among them, metal salts of naphthenic acid, metal salts of dioctylsulfosuccinic acid, the aforementioned maleic acid half amide component-containing copolymer, lecithin and the aforementioned amino acid derivatives can be cited. As these charge adjusting agents, it is possible to jointly use two or more of compounds. It is desirable that concentration of the charge adjusting agent as described in the above is within a range of from 0.0001 to 2.0% by mass based on the total amount of the composition. That is, regarding concentration of the charge adjusting agent, 0.0001% by mass or more is desirable in view of high specific conductivity, and 2.0% by mass or less is desirable in view of keeping necessary printing concentration without reducing volume resistivity.

### (Other Additive agents)

Though the components described in the foregoing are the basic constructing materials in the invention, various additive agents may be added to the composition of the invention as occasion demands. They are optionally selected in response to the materials, structures and the like of the ink jet system or ink jet discharge head, ink supplying part and ink circulating part and included as an ink composition. For example, the additive agents described in "Ink Jet Printer Techniques and Materials (written in Japanese)" Chapter 17, edited by Takeshi Amari, edited in 1998 by C M C, can be used.

Its illustrative examples include fatty acids (e.g., monocarboxylic acids and polybasic acids having from 6 to 32 carbon atoms; e.g., 2-ethylhexynoic acid, dodecenylsuccinic acid, butylsuccinic acid, 2-ethylcaproic acid, lauric acid, palmitic acid, elaidic acid, linoleic acid, recinoleic acid, oleic acid, stearic acid, enanthic acid, naphthenic acid, ethylenediaminetetraacetic acid, abietic acid, dihydroabietic acid and hydrogenated rosin), metal salts of resin acid, alkylphthalic acid, alkylsalicylic acid and the like (as metals of the metal ions, Na, K, Li, B, Al, Ti, Ca, Pb, Mn, Co, Zn, Mg, Ce, Ag, Zr, Cu, Fe, Ba and the like), surface active compounds (e.g., mono, di or trialkylphosphoric acid and the like consisting of an alkyl group having from 3 to 18 carbon atoms as organic phosphoric acids or salts thereof, long chain aliphatic sulfonic acid, long chain alkylbenzenesulfonic acid, dialkylsulfosuccinic acid and the like or metal salts thereof as organic sulfonic acids or salts thereof, and lecithin, kephalin and the like phospholipids as amphoteric surface active compounds), alkyl group-containing surface active agents containing fluorine atom and/or dialkylsiloxane binding group, aliphatic alcohols (e.g., higher alcohols consisting of a branched alkyl group having from 9 to 20 carbon atoms, benzyl alcohol, phenetyl alcohol and cyclohexyl alcohol), polyhydric alcohols {e.g., alkylene glycol having from 2 to 18 carbon atoms (ethylene glycol, 1,2-propylene glycol, 1,3-propylene glycol, 1,4-butanediol, neopentyl glycol, 1,6-hexanediol, dodecanediol and the like)}, alkylene ether glycol having from 4 to 1,000 carbon atoms (diethylene glycol, triethylene glycol, dipropylene glycol, polyethylene glycol, polypropylene glycol, polytetramethylene ether glycol and the like); alicyclic diol having from 5 to 18 carbon atoms (1,4-cyclohexane dimethanol, hydrogenated bisphenol A and the like); alkylene oxide having from 2 to 18 carbon atoms (ethylene oxide, propylene oxide, butylene oxide, α-olefin oxide and the like) addition products of bisphenols having from 12 to 23 carbon atoms (bisphenol A, bisphenol F, bisphenol S and the like), glycerol, trimethylolethane, trimethylolpropane, pentaerythritol, sorbitol an the like polyols; phenols of trivalent to octavalent or more (tris phenol PA, phenol novolak, cresol novolak and the like); alkylene oxide having from 2 to 18 carbon atoms addition products (the addition mol number is from 2 to 29) of the aforementioned polyphenols of trivalent or more, ether derivatives of the aforementioned polyhydric alcohols (polyglycol alkyl ethers, alkyl aryl polyglycol ether and the like), fatty acid ester derivatives of polyhydric alcohol, ether oleate derivatives of polyhydric alcohol (e.g., ethylene glycol monoethyl acetate, diethylene glycol monobutyl acetate, propylene glycol monobutyl propiolate, sorbitan monomethyl dioxide and the like), alkyl naphthalene sulfonate, alkyl aryl sulfonate and the like compounds, though not limited thereto.

It is desirable to use these additive agents by adjusting their using amount to such a level that surface tension of the composition is set within a range of from 15 to 60 mN/m (at 25°C), and its viscosity within a range af from 1.0 to 40 cP.

### (Ink jet ink composition)

A composition which contains the aspherical-polymer fine particles of the invention can be applied as an ink jet ink composition to the ink jet recording by an ink jet recorder.

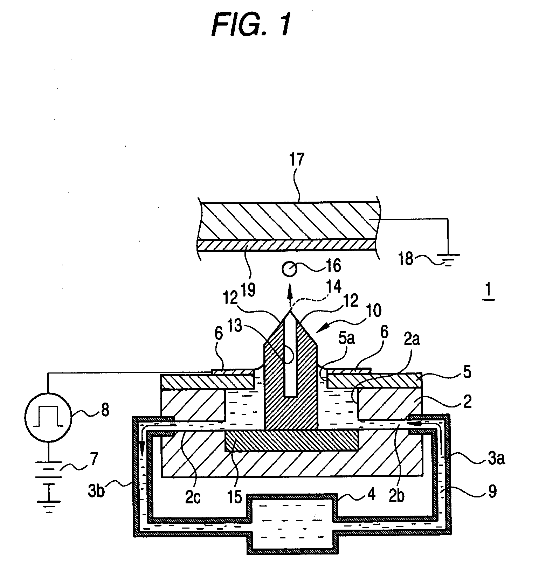

Fig. 1 is a drawing showing construction of an inkjet recorder suitable for the use of the ink composition of the invention, showing a section of its periphery including individual electrodes which correspond to each recording dot. In the drawing, a line scanning type ink jet head 1 is equipped with a head block 2 having an ink well 2a, an insulation substrate 5 arranged on the ink protruding side of this head block 2 and in which a substrate penetrating hole 5a is punch-arranged in response to the ink well 2a, a control electrode 6 arranged by surrounding the aforementioned substrate penetrating hole 5a for applying voltage to a charging ink 9, a bias voltage source 7 which constantly supplies a fixed bias voltage for this control electrode 6, a signal voltage source 8 which supplies, for the control electrode 6, a signal that corresponds to the image to be recorded, and a protruding ink guide 10 arranged in the ink well 2a and substrate penetrating hole 5a.

An ink supplying channel 2b and an ink recovery channel 2c for circulating ink are formed on both sides of the aforementioned head block 2, these ink supplying channel 2b and ink recovery channel 2c are respectively connected to an ink supplying tube 3a and an ink recovery tube 3b, and an ink circulation mechanism 4 is connected to these ink supplying tube 3a and recovery tube 3b.

The aforementioned protruding ink guide 10 is held by a certain method on a head substrate 15 positioned at the bottom of the aforementioned head block 2. In addition, this protruding ink guide 10 is has the shape of a chessman of Japanese chess having a slant part 12 which slants toward both sides having the same thickness, in which an ink guide groove 13 is formed by cutting out a certain width along the center line from the top part where the aforementioned slant parts 12 are crossed, and the ink flowed up this ink guide groove 13 by the capillary phenomenon takes flight as an ink drop 16 from an ink drop flight position 14 to the side of a counter electrode 17. The counter electrode 17 is provided with a predetermined voltage level by an earth source 18, and at the same time, this counter electrode 17 holds a medium for recording 19 as a platen.

This inkjet head 1 is equipped with recording dot-corresponding numbers of individual electrodes, and the ink 9 in Fig. 1 is prepared by dispersing and suspending an ink particles having plus charging property in a colloidal form in an insulating solvent having an electrical resistivity of 10⁸ Ω·cm or more. This ink 9 is supplied toward the ink well 2a arranged between the head substrate 15 and insulating substrate 5, from the ink circulation mechanism 4 including a pump (not illustrated) and the ink supplying tube 3a through the ink supplying channel 2b formed on the head clock 2, and at the same time, recovered into the ink circulation mechanism 4 via the ink recovering channel 2c and ink recovering tube 3b.

The aforementioned insulating substrate 5 is an insulating substrate which has the substrate penetrating hole 5a, and a control electrode substrate is constructed from this and the control electrode 6 formed around the aforementioned substrate penetrating hole 5a on the medium for recording side of this insulating substrate 5. On the other hand, the protruding ink guide 10 is arranged on the head substrate 15 in such a manner that it is positioned at approximately the center of the aforementioned substrate penetrating hole 5a,

### (Oil ink composition for ink jet type process plate)

A composition containing the aspherical-polymer fine particles of the invention can be used in the preparation of printing plate as an oil ink composition for ink jet type process plate.

The water-resistant base material having the hydrophilic surface to which lithography can be applied may be any material that can provide a hydrophilic surface suited for lithography, and any of the base materials conventionally used in the offset printing plate can be used as such. Illustratively, a plastic sheet, a sheet of paper to which printing resistance is applied, an aluminum plate, a zinc plate, bimetal plates such as a copper-aluminum plate, a copper-stainless steel plate and a chrome-copper plate, trimetal plates such as a chrome-copper-aluminum plate, a chrome-zinc-iron plate and a chrome-copper-stainless steel plate, and the like substrates having hydrophilic surface are used. Its thickness is preferably from 0.1 to 3 mm, particularly from 0.1 to 1 mm.

In the case of a base material which has the aluminum surface, it is desirable that a graining treatment, a soaking treatment in an aqueous solution of sodium silicate, zirconium fluoride potassium, a phosphate or the like, an anode oxidation treatment or the like surface treatment is applied thereto. In addition, the aluminum plate which is subjected to graining and then treated by soaking in a sodium silicate aqueous solution as described in US Patent 2,714,066 and the aluminum plate which is subjected to an anode oxidation treatment and then to a soaking treatment in an alkali metal salt aqueous solution as described in JP-B-47-5125 are also used suitably.

The aforementioned anode oxidation treatment is carried out, for example, in an electrolyte consisting of single or a combination of two or more of aqueous solution or non-aqueous solution containing phosphoric acid, chromic acid, sulfuric acid, boric acid or the like inorganic acid, oxalic acid, sulfamic acid or the like organic acid or a salt thereof, by applying an electric current using the aluminum plate as the anode.

In addition, the silicate electro-deposition described in US Patent 3,658,662 is also effective. The treatment with polyvinylsulfonic acid described in West Germany Patent 1,621,478 is also applicable.

These hydrophilic treatments are carried out in order to add hydrophilic property to the surface of base material, and is also carried out for the improvement of adhesion with ink images arranged thereon. In addition, a surface layer may be arranged on the base material surface for the purpose of adjusting adhesive property between the base material and ink images.

When a plastic sheet or paper is used as the base material, parts other than the ink image part must be hydrophilic as a matter of course, so that a plate on which a surface layer having hydrophilic property is provided. Illustratively, a conventionally known original plate for direct writing type lithography or a plate material having a layer similar to the image receiving layer of such an original plate can be used.

For example, the image receiving layer is constituted using a water-soluble binder, an inorganic pigment and a water resistance providing agent as the main components. As the binder, PVA, carboxy PVA or the like modified PVA, starch and its derivatives, CMC, hydroxyethyl cellulose, casein, gelatin, polyvinyl pyrrolidone, vinyl acetate-crotonic acid copolymer, styrene-maleic acid copolymer and the like water-soluble resins are used.

As the water resistance providing agent, glyoxal, melamine formaldehyde resin, urea formaldehyde resin and the like aminoplasts initial condensation products, methylol-modified polyamide resin and the like modified polyamide resins, polyamide-polyamine-epichlorohydrin addition product, polyamide epichlorohydrin resin, modified polyamide polyimide resin and the like can be exemplified. As the inorganic pigment, kaolin clay, calcium carbonate, silica, titanium oxide, zinc oxide, barium sulfate, alumina and the like can be exemplified, of which silica is desirable.

In addition, ammonium chloride, a silane coupling agent or the like crosslinking catalyst can be jointly used in the image receiving layer.

Next, the method for forming an image on the aforementioned original plate for lithography (to be referred also to as "master" hereinafter) is described. As a device system for carrying out such a method, the following ink jet recording device which uses an oil ink can be exemplified.

Firstly, pattern information on the image to be formed on the master (a figure or a sentence) is supplied from a computer or the like information supply source to an ink jet recording device which uses an oil ink, through a pass or the like transfer means. The inkjet recording head of the recording device stores the oil ink therein, and when the master passes through the recording device, it sprays minute droplets of the ink to the master in accordance with the aforementioned information. In this way, the ink is adhered to the master according to the aforementioned pattern.

In this manner, formation of the image on the master is completed to obtain a process plate master (process plate printing original plate).

The head installed in the ink jet recording device has a slit interposed between the upper unit and lower unit, its tip forms a discharge slit, a discharge electrode is arranged in the slit, and oil ink is filled in the slit.

In the head, voltage is applied to the discharge electrode in accordance with the digital signals of pattern information of the image. A counter electrode is arranged facing the discharge electrode, and the master is arranged on the counter electrode. By the application of voltage, a circuit is formed between the discharge electrode and counter electrode, and the oil ink is discharged from the discharge slit of the head and the image is formed on the master arranged on the counter electrode.

Regarding width of the discharge electrode, it is desirable that its tip is as narrow as possible for the purpose of carrying out high quality image formation such as printing.

For example, a printing of 40 µm in dot can be formed on the master, by filling the head 10 with an oil ink, using a discharge electrode having a tip of 20 µm in width, adjusting the space between the discharge electrode and counter electrode to 1.5 mm, and applying a voltage of 3 kV for 0.1 millisecond to the space of electrodes.

### (Electrophoretic particle composition)

A composition containing the aspherical-polymer fine particles of the invention, a non-aqueous solvent and a charge adjusting agent can be applied to an electrophoretic type display device, as an electrophoretic particle composition containing the aspherical-polymer fine particles of the invention as electrophoretic particles.

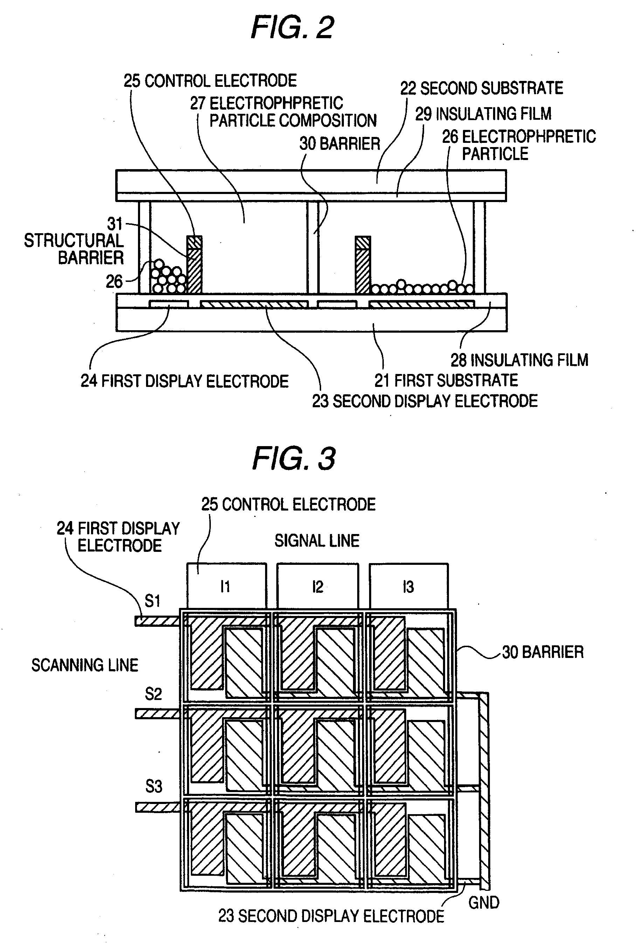

Though the electrophoretic type display device is not particularly limited, the electrophoretic type display device shown in Fig. 2 can for example be cited.

The electrophoretic type display device shown in Fig. 2 has a first substrate 21, an insulation film 28 including a first display electrode 24 and a second display electrode 23 to be arranged on the first substrate 21, a second substrate 22 having an insulation film 29 arranged facing the aforementioned first substrate 21, and a means for applying a desired voltage to each electrodes, wherein a control electrode 25 is arranged on a structural barrier 31 between the aforementioned first display electrode 24 and second display electrode 23, and it has two or more of a structural unit which carry outs switching of display by filling the space between the aforementioned first substrate 21 and second substrate 22 with an electrophoretic particle composition 27 and allowing said electrophoretic particle 26 to move between the first display. electrode 24 and second display electrode 23, via a barrier 30.

In this connection, JP-A-2001-249366 discloses an electrophoretic display device in which the space between said control electrode upper face and aforementioned first substrate surface in Fig. 2 is larger than the space between he aforementioned first display electrode upper face and the aforementioned first substrate surface and the space between he aforementioned second display electrode upper face and the aforementioned first substrate surface, respectively.

Firstly, patterning is carried out by forming the first display electrode 24 and the second display electrode 23 on the first substrate 21. As the material of the substrate, polyethylene terephthalate (PET), polyether sulfone (PES) or the like polymer film or glass, quartz or the like inorganic material can be used. Any substance can be used as the display electrode material with the proviso that it is an electrically conductive material which can effect patterning, and a transparent electrode such as of indium tin oxide (ITO) is used as the first control electrode material.

Next, an insulation layer is formed on the display electrode. As the material of the insulation layer, a material which is a thin film, hardly forms pin hole and has low dielectric constant is desirable, and, for example, an amorphous fluorine resin, a high transparency polyimide, PET, an acryl system resin, an epoxy system resin and the like can be used. As the film thickness of the insulation layer, approximately from 100 nm to 1 µm is suitable.

Next, the structural barrier 31 is formed. A thick film for barrier use, a control electrode film and a resist film are formed in that order in full face, and then the uppermost resist film is subjected to patterning, and the control electrode film and thick film for creating difference in level are treated one by one with dry etching or wet etching.

A polymer resin is used as the barrier or different level-creating material. As the control electrode film or second display electrode material, any substance may be used with the proviso that it is an electrically conductive material which can effect patterning, and in addition to the formation of a thin metal film, a film of ITO may be formed at a low temperature by a magnetron spatter method, or polyaniline or the like organic conductive material may be made into a film by a printing method. As occasion demands, an insulation layer may be formed on the control electrode 5.

Regarding color of the control electrode 25, it may be transparent, or it may be coincided with either one of the first display electrode and second display electrode. Regarding coloring of the display electrode surfaces 23 and 24 and the control electrode surface 25, the color of the electrode material or of the insulation layer material formed on the electrode material may be directly used, or a material layer having a desired color may be formed on the electrode, on the insulation layer and on the substrate surface. Alternatively, a coloring material may be mixed into the insulation layer and the like.

Next, the insulation layer 29 and barrier 30 are formed on the second substrate. Material and film thickness of the insulation layer are as described in the foregoing. Arrangement of the barrier 30 has no limitation, but it is desirable to arrange in such a manner that it surrounds the periphery of each picture element so that the electrophoretic particle 26 does not shifts between picture elements. As the barrier material, a polymer resin is used. Any method may be used for the barrier formation. For example, a method in which a photosensitive resin layer is applied and then exposure and wet development is carried out, a method in which a separately prepared barrier is adhered, a method in which it is formed by a printing method or a method in which it is formed on the surface of a light-transmittable first substrate by a mold can be used.

Next, the electrophoretic particle composition of the invention is filled in each picture element space surrounded by the barrier.

Particle diameter of the electrophoretic particles is not particularly limited, but those having an average particle diameter of from 0.5 µm to 10 µm, preferably from 1 µm to 5 µm are generally used.

Finally, an adhesion layer is formed in the joining face of the first substrate 21 with the second substrate 22, and then the first substrate 21 and the second substrate 22 are put together at the same position and adhered by applying heat. The connecting a voltage applying means to this, the display device is completed.

Using the electrophoretic type display device of Fig. 2 as a unit, the display device shown in Fig. 3 can for example be prepared. In Fig. 3, the control electrode 25 was used as scanning line (S1 to S3), and the first display electrode 24 as a first signal line (I11 to I13).

### Examples

The following describes the invention based on examples, but the invention is not limited to these examples.

### (Inventive Example 1: Synthesis of fine particle dispersion 1)

A 20 g portion of methyl methacrylate, 26 g of methyl acrylate, 4 g of allyl methacrylate and 10g of a resin for dispersal stabilization of the following structure (P-1, mass average molecular weight 52,000) were dissolved in 200 g of Isopar G and, in a stream of nitrogen, heated to a temperature of 70°C and stirred for 1 hour. This was mixed with 0.75 g of 2,2'-azobis(2,4-dimethylvaleronitrile) and stirred under heating for 2 hours and further mixed with 0.5 g of 2,2'-azobis(2,4-dimethylvaleronitrile) and stirred under heating for 2 hours. Next, by increasing the temperature to 100°C, this was stirred for 2 hours under a reduced pressure of 200 mmHg (about 26.6 kPa), and the unreacted monomers were evaporated, After cooling, this was passed through a nylon cloth of 200 mesh, thereby obtaining a white dispersion which was found to be a latex having a polymerization ratio of 99% and a particle density of 20.2%. When volume average particle diameter was measured using an ultracentrifugation type automatic particle size distribution analyzer CAPA 700 (mfd. by HORIBA), the average particle diameter was 1.03 µm.

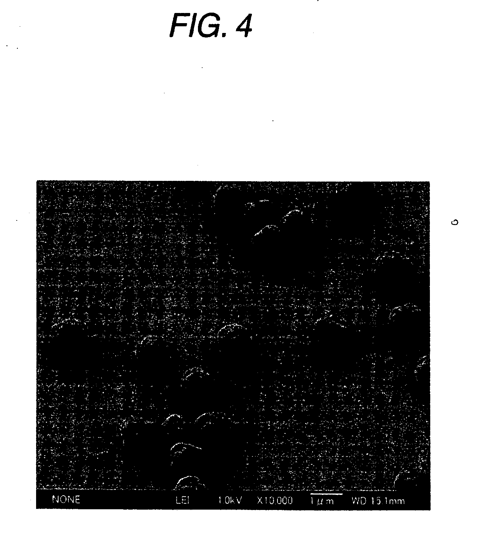

When the particles were photographed using an electron microscope JSM-6700F manufactured by JEOL, it was observed that they were aspherical particles having a particle shape of irregular surface (Fig. 4: photographic image of resin fine particle 1).

When the particles were photographed from the vertical direction against the sample table and the thus obtained photographic images were analyzed using an image analyzing program Mac-View (mfd. by Mountain Tech), the average sphericity was calculated to be 0.92.

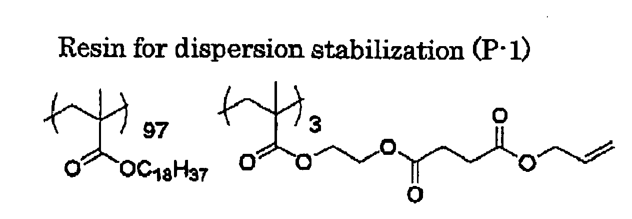

### (Comparative Example 1: Synthesis of fine particle diversion for comparison 1)

A20 g portion of methyl methacrylate, 30 g of methyl acrylate and 10 g of the aforementioned resin for dispersal stabilization (P-1, mass average molecular weight 52,000) were dissolved in 200 g of Isopar G and, in a stream of nitrogen, heated to a temperature of 70°C and stirred for 1 hour. This was mixed with 0.75 g of2,2'-azobis(2,4-dimethylvaleronitrile) and stirred under heating for 2 hours and further mixed with 0.5 g of 2,2'-azobis(2,4-dimethylvaleronitrile) and stirred under heating for 2 hours. Next, by increasing the temperature to 100°C, this was stirred for 2 hours under a reduced pressure of 200 mmHg (about 26.6 kPa), and the unreacted monomers were evaporated. After cooling, this was passed through a nylon cloth of 200 mesh, thereby obtaining a white dispersion which was found to be a latex having a polymerization ratio of 98.5% and a particle density of 22.5%. When volume average particle diameter was measured using the ultracentrifugation type automatic particle size distribution analyzer CAPA 700 (mfd. by HORIBA), the average particle diameter was 1.10 µm.

When the particles were photographed using the electron microscope JSM-6700F manufactured by JEOL, it was observed that they were spherical particles in particle shape. When the particle images were photographed and analyzed, the average sphericity was calculated to be 0.99.

### (Comparative Example 2: Synthesis of fine particle dispersion for comparison 2)

A 18.2 g portion of methyl methacrylate, 27.2 g of methyl acrylate, 4.6 g of dimethylaminoethyl methacrylate and 10 g of the aforementioned resin for dispersal stabilization (P-1, mass average molecular weight 52,000) were dissolved in 200 g of Isopar G and, in a stream of nitrogen, heated to a temperature of 70°C and stirred for 1 hour. This was mixed with 0.75 g of 2,2'-azobis(2,4-dimethylvaleronitrile) and stirred under heating for 2 hours and further mixed with 0.5 g of 2,2'-azobis(2,4-dimethylvaleronitrile) and stirred under heating for 2 hours. Next, by increasing the temperature to 100°C, this was stirred for 2 hours under a reduced pressure of 200 mmHg (about 26.6 kPa), and the unreacted monomers were evaporated. After cooling, this was passed through a nylon cloth of 200 mesh, thereby obtaining a white dispersion which was found to be a latex having a polymerization ratio of 98.5% and a particle density of 22.0%. When volume average particle diameter was measured using the ultracentrifugation type automatic particle size distribution analyzer CAPA 700 (mfd. by HORIBA), the average particle diameter was 1.05 µm.

When the particles were photographed using the electron microscope JSM-6700F manufactured by JEOL, it was observed that they were spherical particles in particle shape. When the particle images were photographed and analyzed, the average sphericity was calculated to be 0.99.

### (Inventive Example 2: Synthesis of fine particle dispersion 2)

A 17.2 g portion of methyl methacrylate, 26.2 g of methyl acrylate, 4.6 g of dimethylaminoethyl methacrylate, 2 g of allyl methacrylate and 10 g of the aforementioned resin for dispersal stabilization (P-1, mass average molecular weight 52,000) were dissolved in 283 g of Isopar- G and, in a stream of nitrogen, heated to a temperature of 70°C and stirred for 1 hour. This was mixed with 0.75 g of 2,2'-azobis(2,4-dimethylvaleronitrile) and stirred under heating for 2 hours and further mixed with 0.5 g of 2,2'-azobis(2,4-dimetbylvaleronitrile) and stirred under heating for 2 hours. Next, by increasing the temperature to 100°C, this was stirred for 2 hours under a reduced pressure of 200 mmHg (about 26.6 kPa), and the unreacted monomers were evaporated . After cooling, this was passed through a nylon cloth of 200 mesh, thereby obtaining a white dispersion which was found to be a latex having a polymerization ratio of 99% and a particle density of 21.2%. When volume average particle diameter was measured using an ultracentrifugation type automatic particle size distribution analyzer CAPA 700 (mfd. by HORIBA), the average particle diameter was 1.05 µm.

When the particles were photographed using an electron microscope JSM-6700F manufactured by JEOL, it was observed that they were aspherical particles having a particle shape of irregular surface. When the particle images were photographed and analyzed, the average sphericity was calculated to be 0.93.

### (Inventive Example 3: Synthesis of fine particle dispersion 3)

A 20 g portion of methyl methacrylate, 26 g of methyl acrylate, 4 g of acrylic acid and 5 g of the aforementioned resin for dispersal stabilization (P-1, mass average molecular weight 52,000) were dissolved in 150 g of Isopar G and, in a stream of nitrogen, heated to a temperature of 70°C and stirred for 1 hour. This was mixed with 0.75 g of 2,2'-azobis(2,4-dimethylvaleronitrile) and stirred under heating for 2 hours and further mixed with 0.5 g of 2,2'-azobis(2,4-dimethylvaleronitrile) and stirred under heating for 2 hours. Next, a solution comprising 20 g of methyl methacrylate, 26 g of methyl acrylate, 4 g of allyl methacrylate, 200 g ofIsopar G and 1.32 g of 2,2'-azobis(2,4-dimethylvaleronitrile) was added dropwise thereto at 70°C spending 3 hours, and after completion of the dropwise addition, the mixture was stirred at the same temperature for 2 hours. Next, by increasing the temperature to 100°C, this was stirred for 2 hours under a reduced pressure of 200 mmHg (about 26.6 kPa), and the unreacted monomers were evaporated . After cooling, this was passed through a nylon cloth of 200 mesh, thereby obtaining a white dispersion which was found to be a latex having a polymerization ratio of 99% and a particle density of 22.5%. When volume average particle diameter was measured using an ultracentrifugation type automatic particle size distribution analyzer CAPA 700 (mfd. by HORIBA), the average particle diameter was 1.0 µm.

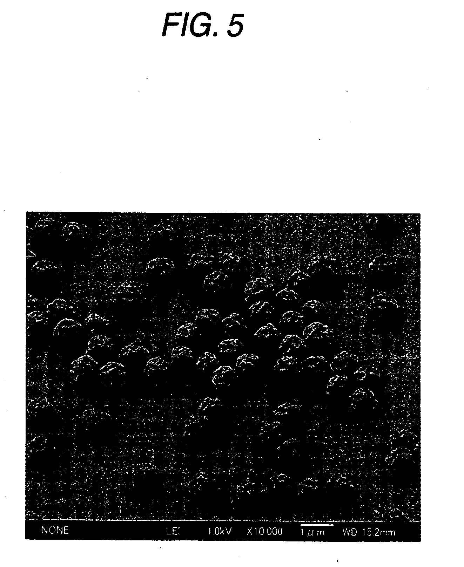

When the particles were photographed using the electron microscope JSM-6700F manufactured by JEOL, it was observed that they were aspherical particles having a particle shape of clearly wrinkled irregular surface (Fig. 5; photographic image of resin fine particle 3). When the particle images were photographed and analyzed, the average sphericity was calculated to be 0.82.

### (Inventive Example 4: Synthesis of fine particle dispersion 4)

A 20 g portion of methyl methacrylate, 26 g of methyl acrylate, 4 g of acrylic acid and 5 g of the aforementioned resin for dispersal stabilization (P-1, mass average molecular weight 52,000) were dissolved in 100 g of Isopar G and, in a stream of nitrogen, heated to a temperature of 70°C and stirred for 1 hour. This was mixed with 0.75 g of 2,2'-azobis(2,4-dimethylvaleronitrile) and stirred under heating for 2 hours and further mixed with 0.5 g of 2,2'-azobis(2,4-dimethylvaleronitrile) and stirred under heating for 2 hours. Thereafter, 100 g of Isopar G was added thereto and stirred at 70°C for 1 hour. Next, a solution comprising 20 g of methyl methacrylate, 26 g of methyl acrylate, 4 g of acrylic acid and 1.3 g of 2,2'-azobis(2,4-dimethylvaleronitrile) was added dropwise thereto at 70°C spending 3 hours, and after completion of the dropwise addition, the mixture was stirred at the same temperature for 2 hours. Further, a solution comprising 40 g of methyl methacrylate, 52 g of methyl acrylate, 8 g of allyl methacrylate, 566 g of Isopar G and 2.6 g of 2,2'-azobis(2,4-dimethylvaleronitrile) was added dropwise thereto at 70°C spending 3 hours, and after completion of the dropwise addition, the mixture was stirred at the same temperature for 2 hours.

Thereafter, by increasing the temperature to 100°C, this was stirred for 2 hours under a reduced pressure of 200 mmHg (about 26.6 kPa), and the unreacted monomers were evaporated. After cooling, this was passed through a nylon cloth of 200 mesh, thereby obtaining a white dispersion which was found to be a latex having a polymerization ratio of 99% and a particle density of 22.5%. When volume average particle diameter was measured using an ultracentrifugation type automatic particle size distribution analyzer CAPA 700 (mfd. by HORIBA), the average particle diameter was 1.96 µm. When the particles were photographed using an electron microscope JSM-6700F manufactured by JEOL, it was observed that they were aspherical particles having a particle shape of clearly wrinkled irregular surface. When the particle images were analyzed using a flow type particle image analyzer FPLA-2100 manufactured by Cismex, the average sphericity was calculated to be 0.85.

### (Inventive Example 5: Synthesis of fine particle dispersion 5)

A 20 g portion of methyl methacrylate, 26 g of methyl acrylate, 4 g of acrylic acid and 5 g of the aforementioned resin for dispersal stabilization (P-1, mass average molecular weight 52,000) were dissolved in 150 g of Isopar G and, in a stream of nitrogen, heated to a temperature of 70°C and stirred for 1 hour. This was mixed with 0.75 g of 2,2'-azobis(2,4-dimethylvaleronitrile) and stirred under heating for 2 hours and further mixed with 0.5 g of 2,2'-azobis(2,4-dimethylvaleronitrile) and stirred under heating for 2 hours. Thereafter, 50 g of Isopar G was added thereto and stirred at 70°C for 1 hour. Next, a solution comprising 17.2 g of methyl methacrylate, 26.2 g of methyl acrylate, 4.6 g of dimethylaminoethyl methacrylate, 2 g of allyl methacrylate, 200 g of Isopar G and 1.30 g of 2,2'-azobis(2,4-dimethylvaleronitrile) was added dropwise thereto at 70°C spending 3 hours, and after completion of the dropwise addition, the mixture was stirred at the same temperature for 2 hours. Next, by increasing the temperature to 100°C, this was stirred for 2 hours under a reduced pressure of 200 mmHg (about 26.6 kPa), and the unreacted monomers were evaporated . After cooling, this was passed through a nylon cloth of 200 mesh, thereby obtaining a white dispersion which was found to be a latex having a polymerization ratio of 99% and a particle density of 21.5%. When volume average particle diameter was measured using an ultracentrifugation type automatic particle size distribution analyzer CAPA 700 (mfd. by HORIBA), the average particle diameter was 1.1 µm.

When the particles were photographed using an electron microscope JSM-6700F manufactured by JEOL, it was observed that they were aspherical particles having a particle shape of clearly wrinkled irregular surface. When the particle images were photographed and analyzed, the average sphericity was calculated to be 0.80.

### (Inventive Example 6: Preparation of colored particle dispersion 1)

The fine particle dispersion 1 synthesized in the above was adjusted to 20% by mass by diluting with Isopar G Next, Victvria Pure Blue (mfd, by Hodogaya Chemical) was added thereto in an amount of 2% by mass based on the solid content of the dispersion and stirred at 85°C for 6 hours. After cooling down to room temperature, this was passed through a 200 mesh nylon cloth to obtain the colored particle dispersion 1.

### (Inventive Examples 7 to 9: Preparation of colored particle dispersions)

A colored particle dispersion 2, 3 or 5 was obtained by carrying out the same operation of Inventive Example 6, except that the fine particle dispersion 2, 3 or 5 was used instead of the fine particle dispersion 1 of Inventive Example 6.

### (Comparative Examples 3 and 4: Preparation of colored particle dispersions for comparison)

A colored particle dispersion for comparison 1 or 2 was obtained by carrying out the same operation of Inventive Example 6, except that the fine particle dispersion for comparison I or 2 was used instead of the fine particle dispersion 1 of Inventive Example 6.

### (Inventive Example 10: Preparation of ink composition)

Next, the aforementioned colored particle dispersion 1 was diluted with Isopar G to a solid content concentration of 7.0% by mass. Subsequently, an ink composition 1 was prepared by adding an octadecene-half octadecylamide maleate copolymer as a charge adjusting agent to a concentration of 0.02% by mass. Viscosity of the thus obtained ink composition was 1.10 cP (E type viscometer, measured at 25°C), and the ink composition 1 showed clear positive charging property, its general specific electric conductivity was 400 pS/cm, and electric conductivity the colöred particles was 320 pS/cm.

In this connection, the charging amount of the ink composition was calculated from the specific electric conductivity measured under conditions of an applying voltage of 5V and a frequency of I kHz, using the aforementioned LCR meter and an electrode for liquid use (Model LP-5 manufactured by Kawaguchi Denki Seisakusho), the particle electric conductivity of the coloring material particles was calculated by subtracting the specific electric conductivity of the supernatant obtained by centrifuging the ink composition from the specific electric conductivity of the whole ink composition, and the volume resistivity was calculated by the inverse number of the whole specific electric conductivity. In addition, the centrifugation was carried out using a small high speed cooling centrifuge (SRX-201 manufactured by Tomy Seiko), at a rotational speed of 14,500 rpm and at a temperature of 23°C for 30 minutes.

### (Inventive Examples 11 to 13 and Comparative Examples 5 and 6)

The colored particle dispersions 2, 3 and 5 prepared in Inventive Examples 7 to 9 and the colored particle dispersions for comparison 1 and 2 prepared in Comparative Examples I and 2 were also subjected to the same operation of Inventive Example 10 to obtain ink compositions 2, 3 and 5 and comparative ink compositions 1 and 2, respectively. The results are shown in Table 1.

**Table 1**

| | Ink composition | Colored particle dispersion | Viscosity CP) | Charging property | Whole conductivity (pS/cm) | Particle conductivity (pS/cm) |
|---|---|---|---|---|---|---|
| Inv. Ex.10 | 1 | 1 | 1.10 | positive charge | 350 | 280 |
| Inv. Ex. 11 | 2 | 2 | 1.08 | positive charge | 360 | 290 |
| Inv. Ex. 12 | 3 | 3 | 1.11 | positive charge | 420 | 360 |
| Inv. Ex. 13 | 5 | 5 | 1.20 | positive charge | 450 | 390 |
| Comp. Ex. 6 | Comp. 1 | 1 | 1.25 | positive charge | 260 | 200 |
| Comp. Ex. 7 | Comp. 2 | 2 | 1.28 | positive charge | 300 | 240 |

### (Inventive Example 14: Evaluation of discharge property and re-dispersion ability by ink jet device)

An ink jet recording device having the construction of Fig. 1 was prepared, and the aforementioned ink composition 1 was fed into the device. Dust was removed from the surface of coat recording paper as the recording medium by air pump suction, and then the discharge head was brought close to the coat recording paper at the printing position and an image was printed by discharging the ink with a print resolution of 600 dpi. In this case, the image was printed by applying a pulse voltage of 500 V to the control electrode 6 and by changing the dot area by 16 steps within a range of from 15 µm to 60 µm in dot diameter. The printing image was stably printed with a uniform dot without bleeding, so that a clear print image having a good quality with satisfactory concentration was obtained. Discharge stability from the ink head was also good, so that printing with stable dot shape was able to effect without causing jamming even by 10 hours of continuous image printing.

After 10 hours of the discharging, the feeding was stopped and the device was allowed to stand at room temperature for a whole day and night. Thereafter, when the feeding was carried out for 3 minutes and then ink discharge property was verified by again applying a pulse voltage of 500 V to the control electrode, good discharge was observed similar to the case of before the stopping and good picture image was obtained with no blur. It was found from this result that re-dispersion ability of ink particles after drying was good. In addition, when the head part was observed, there was no jamming.

### (Inventive Examples 15 to 17 and Comparative Examples 7 and 8)

The ink compositions 2, 3 and 5 and comparative ink compositions 1 and 2 were also subjected to the same operation of Inventive Example 14 to test their discharge property and re-dispersion ability. The results are shown in Table 2.

**Table 2**

| | Ink composition | Image quality | Head jamming | Image quality after restarting | Head jamming after restarting |
|---|---|---|---|---|---|
| Inv. Ex. 14 | 1 | good | no | positive charge | no |
| Inv. Ex. 15 | 2 | good | no | positive charge | no |
| Inv. Ex. 16 | 3 | good | no | positive charge | no |
| Inv. Ex. 17 | 5 | good | no | positive charge | no |
| Comp. Ex. 7 | Comp. 1 | blur | no | considerable blur | jamming |
| Comp. Ex. 8 | Comp. 2 | blur | no | considerable blur | jamming |

### (Inventive Example 18)

A display device having the structure of Fig. 2 and shown in Fig. 3 was prepared. One picture element size was set to 200 µm x 200 µm, and the area ratio of the first display electrode and the second display electrode to 35:65 and the space between the first substrate and the second substrate to 70 µm, and the aforementioned ink composition 2 was filled in the cell. Next, when the display condition was evaluated by applying a pulse voltage to the control electrode, good display contrast was obtained. It showed the good display contrast even after 10,000 times of repetition of the display by pulse voltage application.

### (Comparative Example 9)

The display condition was evaluated in the same manner as in Inventive Example 18, except that the ink composition comparative 2 was used instead of the ink composition 2. As a result, the display contrast was inferior to that of Inventive Example 18.

### (Preparation of base material)

The surface treatment shown in the following was carried out using a JIS A 1050 aluminum plate of 0.30 mm in thickness and 1,030 mm in width.

### (Surface treatment)

Regarding the surface treatment, respective treatments of the following (a) to (f) were continuously carried out. In this case, dewatering was carried out using a nip roller after each treatment and rinsing.
(a) The aluminum plate was subjected to an etching treatment at a sodium hydroxide concentration of 26% by mass, at an aluminum ion concentration of 6.5% by mass and at a temperature of 70°C, to dissolve 5 g/m² of the aluminum plate.. Thereafter, rinsing was carried out.
(b) A death mat treatment was carried out by spraying with 1% by mass in concentration nitric acid aqueous solution (contains 0.5% by mass of aluminum ion) at a temperature of 30°C, and then rinsing was carried out.
(c) An electrochemical rough surface treatment was continuously carried out using an alternating voltage of 60 Hz. The electrolyte of this case was 1% by mass nitric acid aqueous solution (contains 0.5% by mass aluminum ion and 0.007% by mass ammonium ion), and the temperature was 30°C. The electrochemical rough surface treatment was carried out using an alternating current source of 2 msec in the time TM wherein the current value starts from zero and reaches its peak, 1:1 in duty ratio and a trapezoid rectangular wave current, and using a carbon electrode as the counter electrode. Ferrite was used as the auxiliary anode. The current density was 25 A/dm² as the current peak value, and the quantity of electricity was 250 C/cm² as the sum total the quantity of electricity when the aluminum plate was positive electrode. Five percent of the current from the current source was applied as the affective shunt current to the auxiliary anode. Thereafter, rinsing was carried out.
(d) The smut components mainly containing aluminum hydroxide, formed when the aluminum plate was subjected to an etching treatment by spraying at a sodium hydroxide concentration of 26% by mass, at an aluminum ion concentration of 6.5% by mass and at a temperature of 35°C to dissolve 0.2 g/m² of the aluminum plate and then electrochemical rough facing was carried out using the front stage alternate current, were removed, the edge part of the formed pit was dissolved to polish the edge part. Thereafter, rinsing was carried out.
(e) Adeath mat treatment was carried out by spraying with 25% by mass in concentration sulfuric acid aqueous solution (contains 0.5% by mass of aluminum ion) at a temperature of 60°C, and then rinsing was carried out.
(f) An anode oxidation treatment was carried out for 50 seconds at a sulfuric acid concentration of 170 g/liter (contains 0.5% by mass of aluminum ion), at a temperature of 33°C and at a current density of 5 (A/dm ²). Thereafter, rinsing was carried out. The mass of anodic oxidation coatings in this case was 2.7 g/m².

A methanol solution of a compound UL-1 represented by the following formula (x/y/z/w= 20/30/30/20, weight average molecular weight 10,000) was applied to the base material prepared in the above, and then dried in an oven at 70°C for 30 seconds to form an under coat having a dry coat amount of 15 mg/m².

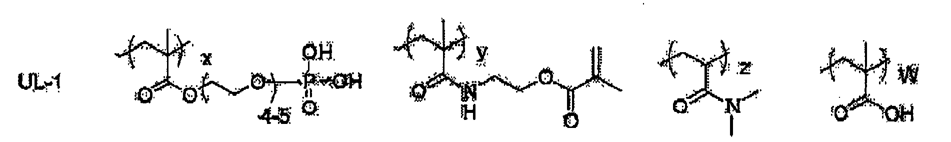

### (Preparation of lithography plate)

An ink jet picture image was formed on the aluminum base material prepared in the above by the ink composition prepared in Inventive Example 12, using the device and method described in Inventive Example 14. Amount of ink of the picture image was 1.1 g/m². Subsequently, the picture image-printed aluminum plate was dried, and then the ink picture image was fixed on the aluminum base material by heating for 10 minutes in an oven of 150°C, thereby preparing the lithography plate.

### (Valuation of print performance)

The lithography plate obtained in the aforementioned sensitivity evaluation was attached to the cylinder of a printer SOR-M manufactured by Heidelberg. Using a moistening water (EU-3 (H liquid mfd. by Fuji Photo Film)/water/isopropyl alcohol = 1/89/10 (volume ratio)) and TRANS-G(N) sumi ink, printing was carried out at a print speed of 5,000 sheets per hour. As a result, good printed matter was obtained without causing staining of the non-print image part. When the number of printing sheets was increased, the picture image recording layer was gradually rubbed down and the ink acceptability was reduced, so that the ink density on the printing paper was reduced. The printing resistance was evaluated based on the number of printed sheets when the ink density (reflection density) of the solid print image part was reduced by a factor of 0.1 in comparison with the density at the time of the commencement of the printing, and as a result, it was possible to print 30,000 sheets of paper.

The present application claims foreign priority based on Japanese Patent Application (JP 2005-159167) filed May 31 of 2005, Japanese Patent Application (JP 2006-149309) filed May 30 of 2006, the contents of which is incorporated herein by reference.

## Claims

1. Aspherical-polymer fine particles comprising resin particles synthesized by polymerizing radically at least one radical polymerizable monomer in a non-aqueous solvent in the presence of a resin for dispersal stability, wherein the aspherical-polymer fine particles have a sphericity of 0.95 or less.

2. The aspherical-polymer fine particles as claimed in claim I, wherein the at least one radical polymerizable monomer is a compound having at least two polymerizable groups in one molecule thereof.

3. The aspherical-polymer fine particles as claimed in claim 1, wherein the at least one radical polymerizable monomer is a monomer having at least two ethylene unsaturated bonds in the molecule thereof, the at least two ethylene unsaturated bonds having different reactivities from one another with radical.

4. The aspherical-polymer fine particles as claimed in claim 1, wherein the at least one radical polymerizable monomer is a compound represented by the formula (I), 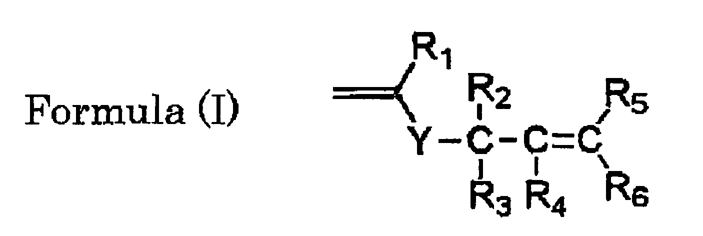 wherein R₁ represents one selected from the group consisting of a hydrogen atom, a substituted alkyl group having from 1 to 6 carbon atoms and an unsubstituted alkyl group kaaving from 1 to 6 carbon atoms, each of R₂ to R₆ independently represents one selected from the group consisting of a hydrogen atom, a substituted alkyl group having from 1 to 6 carbon atoms and an unsubstituted alkyl group having from 1 to 6 carbon atoms, respective substituent groups on the adjacent carbon atom may be linked each other to form a cyclic structure, and Y represents a divalent linking group.

5. The aspherical-polymer fine particles as claimed in claim 1, wherein the at least one radical polymerizable monomer is a monomer having at least two ethylene unsaturated bonds in the molecule thereof, the at least two ethylene unsaturated bonds being identical with reactivity.

6. A method for producing aspherical-polymer fine particles, which comprises a radically polymerizing process,
wherein
the radically polymerizing process comprises:
a dissolving a resin for dispersal stabilization and at least one compound in a non-aqueous solvent, the at least one compound having at least two polymerizable groups in one molecule;
an adding a radical polymerizing initiator to the non-solvent; and
a heating the non-aqueous solvent.

7. A method for producing aspherical-polymer fine particles, which comprises a first radically polymerizing process and a second radically polymerizing process,
wherein
(1) the first radically polymerizing process comprises:
a dissolving a resin for dispersal stabilization and radical polymerizable monomers in a non-aqueous solvent so as to provide a first mixture;
an adding a radical polymerizing initiator to the first mixture; and
a heating the first mixture,
(2) the second radically polymerizing process comprises:
an adding a radical polymerizing initiator and at least one compound in a non-aqueous solvent, the at least one compound having at least two polymerizable groups in one molecule, to the dispersal solution including the fine particles so as to provide a second mixture; and
a heating the second mixture.

8. An ink composition comprising aspherical-polymer fine particles described in claim 1.

9. A method for producing lithographic printing plate, which comprises;
a discharging an ink composition described in claim 8 onto a hydrophilic substrate; and
a radiating an active radiation to the ink composition so that a hydrophobic image is formed on the hydrophilic substrate.

10. An electrophoretic particle composition comprising: aspherical-polymer fine particles described in claim 1, a non-aqueous solvent, and a charge adjusting agent.
